(19) Europäisches Patentamt
European Patent Office
Office européen des brevets

(11) **EP 3 401 096 A1**

(12) **EUROPÄISCHE PATENTANMELDUNG**

(43) Veröffentlichungstag:
**14.11.2018 Patentblatt 2018/46**

(51) Int Cl.:
***B33Y 70/00*** *(2015.01)*     ***B29C 64/153*** *(2017.01)*
***B33Y 10/00*** *(2015.01)*

(21) Anmeldenummer: **17170254.1**

(22) Anmeldetag: **09.05.2017**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD**

(71) Anmelder: **Covestro Deutschland AG
51373 Leverkusen (DE)**

(72) Erfinder: **Die Erfindernennung liegt noch nicht vor**

(74) Vertreter: **Levpat
c/o Covestro AG
Gebäude 4825
51365 Leverkusen (DE)**

(54) **VERFAHREN ZUR HERSTELLUNG VON PRODUKTEN MIT HILFE VON ADDITIVEN FERTIGUNGSVERFAHREN MIT REAKTIVPULVERN SOWIE DEREN PRODUKTE**

(57) Es wird ein Verfahren zur Herstellung eines dreidimensionalen Objektes mittels eines pulverbasierten additiven Herstellungsverfahrens beschrieben aus mindestens einem ersten pulverförmigen Material, wobei das mindestens eine erste pulverförmige Material mindestens eine erste Verbindung beinhaltet, die eine erste reaktive Gruppe a) aufweist, wobei die erste reaktive Gruppe a) ausgewählt ist aus der Gruppe bestehend aus einer Isocyanatgruppe, einer blockierten Isocyanatgruppe oder einer Mischung hieraus. Weiterhin wird ein Bauteil hergestellt nach dem erfindungsgemäßen Verfahren beschrieben sowie pulverförmiges Material, das geeignet ist für das erfindungsgemäße Verfahren.

EP 3 401 096 A1

**Beschreibung**

Die Erfindung betrifft ein Verfahren Herstellung eines dreidimensionalen Objektes mittels eines pulverbasierten additiven Herstellungsverfahrens aus mindestens einem ersten pulverförmigen Material, wobei das mindestens eine erste pulverförmige Material blockierte und/oder freie NCO-Gruppen beinhaltet. Weiterhin betrifft die Erfindung ein Bauteil erhältlich nach dem Verfahren und ein pulverförmiges Material zur Verwendung in dem erfindungsgemäßen Verfahren.

Additive Fertigungsverfahren nutzen unterschiedliche Materialien und Prozesstechniken, um Gegenstände schichtweise aufzubauen. Beim sogenannten Fused Deposition Modeling (FDM) beispielsweise wird ein thermoplastischer Kunststoffdraht verflüssigt und mit Hilfe einer Düse schichtweise auf einer beweglichen Bauplattform abgelegt. Beim Erstarren entsteht ein fester Gegenstand. Die Steuerung der Düse und der Bauplattform erfolgt auf der Grundlage einer CAD-Zeichnung des Gegenstands. Ist die Geometrie dieses Gegenstands komplex, zum Beispiel mit geometrischen Hinterschneidungen, müssen zusätzlich Stützmaterialien mitgedruckt und nach Fertigstellung des Gegenstands wieder entfernt werden.

Daneben existieren additive Fertigungsverfahren, welche thermoplastische Pulver nutzen, um Gegenstände schichtweise aufzubauen. Hierbei werden über einen so genannten Beschichter dünne Pulverschichten aufgetragen und anschließend mittels einer Energiequelle selektiv aufgeschmolzen. Das umgebende Pulver stützt dabei die Bauteilgeometrie. Komplexe Geometrien sind dadurch wirtschaftlicher zu fertigen als beim zuvor beschrieben FDM-Verfahren. Zudem können verschiedene Gegenstände eng gepackt im so genannten Pulverbett angeordnet beziehungsweise gefertigt werden. Aufgrund dieser Vorteile gelten pulverbasierte additive Fertigungsverfahren zu den wirtschaftlichsten additiven Herstellungsverfahren am Markt. Sie werden daher überwiegend von industriellen Nutzern verwendet. Beispiele für pulverbasierte additive Fertigungsverfahren sind das sogenannte Lasersintern (SLS, Selective Laser Sintering) oder das High Speed Sintering (HSS). Sie unterscheiden sich untereinander in der Methode, um die Energie für das selektive Aufschmelzen in den Kunststoff einzutragen. Beim Lasersinterverfahren erfolgt der Energieeintrag gezielt über einen gelenkten Laserstrahl. Beim so genannten High Speed Sintering (HSS)-Verfahren (EP 1648686) erfolgt der Energieeintrag über Infrarot (IR)-Strahler in Kombination mit einem selektiv in das Pulverbett gedruckten IR-Absorber. Das so genannte Selective Heat Sintering (SHS) nutzt die Druckeinheit eines konventionellen Thermodruckers, um thermoplastische Pulver selektiv aufzuschmelzen.

Polyamid 12 (PA12) ist der derzeit am meisten eingesetzte Werkstoff für pulverbasierte additive Fertigungsverfahren, wie z.B. dem Lasersintern. PA12 zeichnet sich durch hohe Festigkeit und Zähigkeit aus, wenn es im Spritzguss oder durch Extrusion verarbeitet wird. Ein handelsübliches PA12 zeigt beispielsweise nach dem Spritzgießen eine Bruchdehnung von mehr als 200%. PA12-Gegenstände, die mit dem Lasersinterverfahren hergestellt sind, zeigen hingegen Bruchdehnungen um 15%. Das Bauteil ist spröde und kann daher nicht mehr als typisches PA12-Bauteil angesehen werden. Gleiches gilt für Polypropylen (PP), welches als Pulver für das Lasersintern angeboten wird. Auch dieses Material zeigt als lasergesintertes Bauteil ein spröderes Verhalten als spritzgegossenes PP mit seinen typischen zähelastischen Eigenschaften.

Auch die im Lasersintern und verwandten pulverbasierten additiven Fertigungsverfahren eingesetzten elastischen Polymere auf Basis von Block-Copolymeren zeigen ein für die eingesetzten Polymere untypisches Eigenschaftsprofil, wenn sie als Pulver mit additiven Fertigungsverfahren zu Gegenständen verarbeitet werden. Beim Lasersintern kommen heute thermoplastische Elastomere (TPE) zum Einsatz. Gegenstände, die aus den heute verfügbaren TPEs hergestellt werden, weisen nach dem Erstarren eine hohe Restporosität auf und die ursprüngliche Festigkeit des TPE Werkstoffs ist nicht im daraus gefertigten Gegenstand messbar. In der Praxis werden diese porösen Bauteile daher nachträglich oft mit flüssigen, aushärtenden Polymeren infiltriert, um das erforderliche Eigenschaftsprofil einzustellen. Die Festigkeit und Dehnung bleibt trotz dieser zusätzlichen Maßnahme auf einem niedrigen Niveau. Der zusätzliche Verfahrensaufwand führt - neben den immer noch unzureichenden mechanischen Eigenschaften - zu einer schlechten Wirtschaftlichkeit dieser Materialien.

Des Weiteren wird thermoplastisches Polyurethan (TPU) im Lasersintern und verwandten pulverbasierten additiven Fertigungsverfahren eingesetzt. Gegenstände aus gesintertem TPU zeichnen sich unter anderem durch hohe Reißfestigkeiten und Dehnungen und somit durch große Elastizität und Zähigkeit im Vergleich zu z.B. den vorgenannten TPE aus.

Bisher sind allerdings noch keine Bauteile aus vernetzten Polymeren durch pulverbasierte additive Fertigungsverfahren, die ein selektives Aufschmelzen nutzen, hergestellt worden. Für den Einsatz in Anwendungen mit besonderen Ansprüchen wie besonders guten mechanischen, thermischen und chemischen Eigenschaften besteht ein Bedarf auch vernetzte Polymere mit diesen additiven Fertigungsverfahren herzustellen.

Eine Aufgabe der vorliegenden Erfindung war es daher mindestens einen Teil der Nachteile des Standes der Technik wenigstens zu einem Teil zu überwinden.

Weiterhin war eine Aufgabe der Erfindung, die mechanischen, chemischen oder thermischen Eigenschaften von mit additiven Verfahren hergestellten Objekten zu verbessern. Insbesondere war es eine Aufgabe der Erfindung ein Verfahren bereit zu stellen mit dem auf effiziente Weise Gegenstände mit komplexer dreidimensionaler Struktur mit unterschiedlichsten Eigenschaften herstellbare sind.

Es war eine Aufgabe der Erfindung variable Eigenschaftsprofile von mittels additiven Verfahren herstellbaren Objekten bereitzustellen.

Ein erster Gegenstand der Erfindung betrifft ein Verfahren zur Herstellung eines dreidimensionalen Objektes mittels eines pulverbasierten additiven Herstellungsverfahrens aus mindestens einem ersten pulverförmigen Material, wobei das mindestens eine erste pulverförmige Material mindestens eine erste Verbindung beinhaltet, die eine erste reaktive Gruppe a) aufweist, wobei die erste reaktive Gruppe a) ausgewählt ist aus der Gruppe bestehend aus einer Isocyanatgruppe, einer blockierten Isocyanatgruppe oder einer Mischung hieraus. Das erste pulverförmige Material kann darüber hinaus mindestens eine weitere Verbindung aufweisen.

Unter blockierten Isocyanatgruppen, häufig auch verkappte Isocyanatgruppen genannt, sind insbesondere solche zu verstehen, die ab einer Temperatur T > 40 °C bevorzugt > 60 °C, oder bevorzugt > 80 °C, oder bevorzugt > 90 °C, unter Zersetzung und/oder Abspaltung des Blockierungsmittels eine freie Isocyanatgruppe ausbilden. Bevorzugt findet die Freisetzung der Isocyanatgruppe aus der blockierten Isocyanatgruppe über einen Zeitraum von < 24h, oder bevorzugt < 20h, oder bevorzugt < 16h, oder bevorzugt < 12h statt. Bevorzugt bilden mindestens 50 %, bevorzugt mindestens 60 %, oder bevorzugt mindestens 70 % der blockierten Isocyanatgruppen eine freie Isocyanatgruppe aus, die bevorzugt mindestens zu 30 %, oder bevorzugt mindestens zu 40 %, oder bevorzugt mindestens zu 50 % im Laufe des erfindungsgemäßen Verfahrens zu einer neuen Verbindung abreagieren, die sich chemisch von der ersten oder den weiteren Verbindungen des pulverförmigen Materials unterscheidet aus der sic entstanden ist. Geeignete blockierte Isocyanatgruppen sind dem Fachmann aus dem Bereich der Polyurethanchemie bekannt und werden im Übersichtsartikel von E. Delebecq, J. P. Pascault, B. Boutevin, F. Ganachaud: On the versatility of urethane/urea bonds: reversibility, blocked isocyanate, and non-isocyanate polyurethane; In: Chemical Reviews. Band 113, Nummer 1, Januar 2013, S. 80-118 und in der Zeitschrift "Farbe & Lack 12/2003" auf Seite 32 mit dem Titel "Neuen Blockierungsmitteln auf der Spur", beispielhaft beschrieben.

Eine bevorzugte Art der Blockierung stellt dabei der Einsatz von Feststoffisocyanaten auf HDI, IPDI, TDI und MDI Basis oder deren Mischungen vorzugsweise in Form von Trimeren, Allophanaten und Uretdionen dar, mit einem Schmelzpunkt (wobei hier Schmelzpunt synonym für eine Glastemperatur eines amorphen Feststoffs oder den Schmelzpunkt eines kristallinen Feststoffs steht) von > 40 °C, oder bevorzugt von > 50 °C, oder bevorzugt von >60 °C, oder bevorzugt von > 70 °C, wobei das Isocyanat, in Form einer freien Isocyanatgruppe, für eine Reaktion erst nach Aufschmelzen des Feststoffs verfügbar wird.

Bevorzugte blockierten Isocyanate werden als Alophanate oder Uretdione eingesetzt, wobei ab einer Temperatur von bevorzugt >80°C, oder bevorzugt von >100°C die Uretdione und/oder Alophanate sich unter Freisetzung von freien, reaktiven Isocyanatgruppen mindestens zu einem Teil spalten, besonders in Gegenwart geeigneter bevorzugt basischer Katalysatoren.

Geeignete blockierte Isocyanate sind dabei kommerziell erhältlich zum Beispiel von der Covestro Deutschland AG unter den Handelsnamen Desmodur®, Desmodur® BL, Desmocap® und Sumidur® BL, sowie der Evonik Industries AG und der BASF SE.

Das erste pulverförmige Material weist mindestens eine Verbindung auf, die mindestens eine reaktive Gruppe a) in Form einer blockierten Isocyanatgruppe, im Folgenden auch blockierte NCO-Gruppe genannt und/oder einer Isocyanatgruppe, im Folgenden auch freie NCO-Gruppe genannt, aufweist. Das erste pulverförmige Material beinhaltet bevorzugt weiterhin mindestens eine weitere reaktive Gruppe b), die sich von der ersten reaktiven Gruppe a) unterscheidet. Die weitere reaktive Gruppe b) ist bevorzugt eine NCO-reaktive Gruppe. Die weitere reaktive Gruppe b) kann sowohl Bestandteil der ersten Verbindung sein oder Bestandteil der mindestens einen weiteren Verbindung.

Das additive Herstellungsverfahren kann jedes Herstellungsverfahren sein, das dazu geeignet ist, die blockierten oder freien NCO-Gruppen des ersten pulverförmigen Materials zu einer Reaktion während des Herstellprozesses zu bringen. Bevorzugt ist das additive Herstellungsverfahren ein selektives Lasersintering-Verfahren (SLS), bei dem die eingetragene Energie nicht nur dazu ausreicht das erste pulverförmige Material aufzuschmelzen sondern auch die NCO-Gruppen zur Reaktion zu bringen, sodass neue kovalente Bindungen aufgrund der Reaktion der NCO-Gruppen entstehen. Im Folgenden werden die blockierten und/oder freien NCO-Gruppen als erste reaktive Gruppen a) bezeichnet.

Die blockierten und/oder freien NCO-Gruppen reagieren während des Herstellverfahrens bevorzugt mit weiteren ersten reaktiven Gruppen a) oder mit mindestens einer weiteren reaktiven Gruppe b), die bevorzugt NCO-reaktiv sind. Bevorzugt sind die weiteren reaktiven Gruppen b) ausgewählt aus der Gruppe bestehend aus einer Hydroxylgruppe, einer Aminogruppe, einer Thiolgruppe, einer Epoxidgruppe, einer Anhydridgruppe, einer Carboxygruppe, einer Carbonsäuregruppe einer Carboxylatgruppe, einer Estergruppe, einer Carbodiimidgruppe,einer Amidgruppe, einer Aldehydgruppe, einer Triazingruppe, einer zyklischen Estergruppe, einer zyklischen Lactam Gruppe, einer zyklischen Carbonatgruppe, einer Thiuramgruppe oder einer Kombination aus mindestens zwei hiervon. Bei der reaktiven Gruppe b) steht das b) bevorzugt für eine Vielzahl unterschiedlicher reaktiver Gruppen b), die im Folgenden auch reaktive Gruppen b) bis z) genannt werden. Bevorzugt symbolisiert eine reaktive Gruppe b) bis z) jede weitere reaktive Gruppe, die sich von der ersten reaktiven Gruppe a) unterscheidet. Bevorzugt unterscheidet sich die reaktive Gruppe a) chemisch von der mindestens einen weiteren reaktiven Gruppe b).

Bevorzugt findet die Herstellung des dreidimensionalen Objektes in dem Herstellungsverfahren zusätzlich mittels wenigstens eines weiteren pulverförmigen Materials statt. Das weitere pulverförmige Material weist bevorzugt eine weitere Verbindung, bevorzugt ein Polymer, auf, das ebenfalls mindestens eine reaktive Gruppe aufweist. Die mindestens eine reaktive Gruppe des mindestens einen weiteren pulverförmigen Materials ist bevorzugt ausgewählt aus der Gruppe bestehend aus einer reaktiven Gruppe a), einer reaktiven Gruppe b) bis z), wie zuvor beschrieben, oder aus einer Kombination aus mindestens zweier dieser Gruppen. Bevorzugt weist das erste pulverförmige Material oder das wenigstens eine weitere pulverförmige Material mindestens zwei unterschiedliche reaktive Gruppen a) oder b) bis z) auf.

Bevorzugt weist das erste pulverförmige Material eine mittlere molekulare Masse auf, die in einem Bereich von 200 g/mol bis 500000 g/mol, oder bevorzugt von 250 g/mol bis 100000 g/mol, oder bevorzugt in einem Bereich von 300 bis 50000 g/mol. Bevorzugt ist die mittlere molekulare Masse des ersten pulverförmigen Materials niedriger als die mittlere molekulare Masse des wenigstens einen weiteren pulverförmigen Materials. Bevorzugt ist die mittlere molekulare Masse des ersten pulverförmigen Materials kleiner als die mittlere molekulare Masse des mindestens einen weiteren pulverförmigen Materials. In einer bevorzugten Ausführungsform handelt es sich mindestens bei dem mindestens einen weiteren pulverförmigen Material um ein Polymer nach der gängigen Definition des Chemikaliengesetzes nach dem ein Polymer ein Stoff ist, dessen Moleküle aus verketteten Monomereinheiten bestehen.

Wird im Folgenden lediglich von dem Polymer gesprochen, so gelten die Aussagen sowohl für das erste pulverförmige Material als auch für jedes weitere pulverförmige Material entsprechend der Definition. Alle weiteren Angaben, die im Folgenden im Zusammenhang mit bevorzugten Ausführungsformen für das erste pulverförmige Material sowie das mindestens eine weitere pulverförmige Material genannt werden, sind auch für aller Kombinationen von bevorzugten Ausführungsformen anwendbar.

In einer bevorzugten Ausgestaltung des erfindungsgemäßen Verfahrens beinhaltend das Verfahren mindestens die Schritte:

i. Bereitstellen wenigstens des ersten pulverförmigen Materials auf wenigstens einem Teil einer Oberfläche, wobei mindestens das erste pulverförmige Material mindestens eine erste Verbindung beinhaltet, die mindestens eine erste reaktive Gruppe a) und gegebenenfalls mindestens eine weitere reaktive Gruppe b) beinhaltet; wobei die erste reaktive Gruppe a) ausgewählt ist aus der Gruppe bestehend aus einer Isocyanatgruppe, einer blockierten Isocyanatgruppe oder einer Mischung hieraus,

ii. gegebenenfalls Behandeln mindestens eines Teils des ersten pulverförmigen Materials;

iii. gegebenenfalls Aufbringen eines weiteren pulverförmigen Materials, wobei das weitere pulverförmige Material eine weitere Verbindung beinhaltet, wobei die weitere Verbindung gegebenenfalls eine reaktive Gruppe a) und/oder gegebenenfalls mindestens eine weitere reaktive Gruppe b) beinhaltet;

iv. Behandeln mindestens eines Teils des in Schritt i. und/oder in Schritt iii. aufgebrachten pulverförmigen Materials;

v. mindestens dreimaliges Wiederholen der Schritte i. bis iv. mit dem ersten pulverförmigen Material und/oder dem weiteren pulverförmigen Material, unter Erhalt des dreidimensionalen Objektes;

vi. gegebenenfalls thermisches oder chemisches Nachbehandeln des erhaltenen Objektes;

wobei beim Behandeln in Schritt ii. und gegebenenfalls in Schritt iv. in dem behandelten Teil des ersten und gegebenenfalls des weiteren pulverförmigen Materials mindestens ein Teil der reaktiven Gruppen a) und gegebenenfalls b) untereinander und/oder miteinander unter Erhalt eines Endmaterials reagieren.

Bevorzugt reagieren beim Behandeln in Schritt ii. und gegebenenfalls in Schritt iv. in dem behandelten Teil des ersten oder des weiteren pulverförmigen Materials mindestens ein Teil der reaktiven Gruppen a) und gegebenenfalls b) untereinander und/oder miteinander unter Erhalt eines Endmaterials. Bevorzugt weist das Endmaterial einen um mindestens 0,01 MPa höheren E-Modul im Vergleich zu dem E-Modul des jeweils unbehandelten pulverförmigen Materials auf.

Bevorzugt weist das Endmaterial eine Erhöhung des E-Modul in einem Bereich von 0,01 MPa bis 10 GPa, oder bevorzugt in einem Bereich von 0,5 MPa bis 5 GPa, oder bevorzugt in einem Bereich von 1 MPa bis 2 GPa, oder bevorzugt in einem Bereich von 10 MPa bis 1GPa, oder bevorzugt in einem Bereich von 15 MPa bis 0,5 GPa jeweils im Vergleich zu dem E-Modul des pulverförmigen Materials aus Schritt i. bzw. ggf. aus Schritt iii.. Das E-Modul wird gemäß EN ISO 527-1 (letzte Ausgabe vom April 1996, aktuelle ISO-Version Februar 2012) bestimmt. Wird ein weiteres pulverförmiges Material mit reaktiven Gruppen a) und/oder b) in Schritt iii. verwendet, so wird dieses weitere pulverförmige Material in Schritt iv. ebenfalls behandelt und erfährt hierdurch bevorzugt eine Veränderung des E-Moduls im gleichen Bereich wie oben für das erste pulverförmige Material beschrieben.

Bevorzugt weist das Endmaterial eine Schmelzviskosität auf, die gegenüber der Schmelzviskosität des jeweiligen pulverförmigen Materials um mehr als 100 mPas, oder bevorzugt um mehr als 500 mPas, oder bevorzugt um 1000 mPas höher gemessen bei einer Scherrate von 1/s und bei einer Temperatur die mindestens 10 °C höher als die Schmelztemperatur der höchst schmelzenden Komponente ist.

Zur Messen der veränderten Schmelzviskosität werden gesinterten Plättchen von 1 mm Dicke in einem Rheometer (*TA Iustruments ARES*) in Oszillation auf ihre Viskosität und ihren Speichermodul hin untersucht. Die Schmelzviskosität wurde bestimmt durch Viskosimetriemessung in der Schmelze mit einem Platte/Platte-Oszillationsviskosimeter gemäß ISO 6721-10. Die Messfrequenz betrug 1 Hz, die Messtemperatur war 170 °C.

Weiterhin bevorzugt wird vor Schritt ii. ein drittes pulverförmiges Material, beinhaltend eine dritte Verbindung, bevorzugt ein Polymer, das keine reaktiven Gruppen aufweist, die mit den reaktiven Gruppen des ersten pulverförmigen Materials reagieren können auf das erste pulverförmige Material aufgebracht.

Bevorzugt beinhaltet das weitere pulverförmige Material ebenfalls mindestens eine weiteren Verbindung in Form eines Polymers, das mindestens eine erste reaktive Gruppe a) und/oder mindestens eine weitere reaktive Gruppe b) aufweist. Bevorzugt beinhaltet das erste oder das weitere pulverförmige Material mindestens ein erstes Polymer, das mindestens eine reaktive Gruppe a) aufweist und mindestens ein weiteres Polymer, das mindestens eine reaktive Gruppe b) aufweist. Bevorzugt beinhaltet das erste oder das weitere pulverförmige Material mindestens ein Polymer, das ausschließlich reaktive Gruppen a) aufweist und mindestens ein weiteres Polymer, das ausschließlich reaktive Gruppen b) aufweist, wobei sich die reaktiven Gruppen a) und b) chemisch voneinander unterscheiden.

Bei Einsatz mindestens zweier unterschiedlicher pulverförmiger Materialien zum Aufbau des erfindungsgemäßen dreidimensionalen Objektes unterscheidet sich das erste pulverförmige Material von dem mindestens einen weiteren pulverförmigen Material bevorzugt aufgrund deren unterschiedlichen mittleren molekularen Masse des hauptsächlich in dem jeweiligen pulverförmigen Material verwendeten Polymers. Alternativ oder zusätzlich unterscheidet sich das erste pulverförmige Material von dem mindestens einen weiteren pulverförmigen Material aufgrund der Art oder Anzahl der vorhandenen reaktiven Gruppen a) oder b) pro Polymermolekül, wobei b) für eine Vielzahl verschiedener reaktiver Gruppen b) bis z) stehen kann. Im Weiteren wird diese Vielzahl verschiedener reaktive Gruppen durch die Formulierung b) bis z) wiedergespiegelt. Dabei soll die Anzahl der verschiedenen reaktiven Gruppen jedoch nicht auf die Anzahl von Buchstaben begrenzt sein.

Bevorzugt beinhaltet das Behandeln in Schritt ii. und ggf. in Schritt iv. ein Einwirken von Energie auf einen ausgewählten Teil der in Schritt i. und ggf. in Schritt iii. aufgebrachten Lage an pulverförmigem Material, entsprechend einem ersten ausgewählten Querschnitt des dreidimensionalen Objektes. Bevorzugt wird mindestens ein Teil des pulverförmigen Materials während des Behandelns in Schritt ii. und ggf. in Schritt iv. aufgeschmolzen. Weist die Lage des aufgebrachten ersten pulverförmigen Materials in Schritt i. oder ggf. des weiteren pulverförmigen Materials mindestens ein weiteres Polymer, z. B. das zweite Polymer, auf, so wird bevorzugt beim Behandeln in Schritt ii. und ggf. in Schritt iv. sowohl ein Teil des ersten pulverförmigen Materials oder ggf. des zweiten pulverförmigen Materials zusammen mit dem weiteren Polymer aufgeschmolzen. Bevorzugt kontaktieren sich die Schmelzen der beiden mindestens zwei aufgeschmolzenen Polymere. Bevorzugt liegt die Schmelztemperatur und/oder die Glasübergangstemperatur des ersten Polymers des ersten pulverförmigen Materials in einem Bereich, der nicht mehr als 1 bis 150 °C, oder bevorzugt nicht mehr als 2 bis 100 °C, oder bevorzugt nicht mehr als 3 bis 70 °C, oder bevorzugt nicht mehr als 4 bis 50 °C von der Schmelztemperatur und/oder der Glasüberganstemperatur des zweiten Polymers oder des weiteren Polymers des ersten pulverförmigen Materials abweicht. Das gleiche gilt bevorzugt für das erste und alle weiteren Polymere des mindestens einen weiteren pulverförmigen Materials.

Das Aufschmelzen der Polymere der pulverförmigen Materialien kann beispielsweise mittels ablenkbarer Laser erfolgen und korrespondiert zu einem ausgewählten Querschnitt des herzustellenden Objektes. Weitere bevorzugte Möglichkeiten für das Aufschmelzen sind aus dem Stand der Technik bekannt und werden beispielsweise in der EP Anmeldung mit der Anmeldenummer EP16199955.2 genannt. Das Auswählen des jeweiligen Querschnitts erfolgt zweckmäßigerweise durch ein CAD-Programm, mit dem ein Modell des herzustellenden Gegenstandes erzeugt wurde. Diese Operation wird auch "Slicing" genannt, und dient als Grundlage für die Steuerung des Behandelns, beispielsweise in Form eines Bestrahlens durch den oben beispielhaft genannten Laser.

Bevorzugt erfährt mindestens eines der pulverförmigen Materialien, insbesondere das erste pulverförmige Material während des Behandelns in Schritt ii. und gegebenenfalls in Schritt iv. eine Viskositätsänderung in der Schmelze in einem Bereich von >10 % oder bevorzugt in einem Bereich von >20 %, oder bevorzugt in einem Bereich von > 30 %, bezogen auf die Viskosität in der Schmelze des ersten pulverförmigen Materials vor dem Behandeln in Schritt ii. gemessen bei einer Temperatur von 10 °C oberhalb der Schmelztemperatur des unbehandelten pulverförmigen Materials.

Bevorzugt wird die Viskosität des geschmolzenen pulverförmigen Materials, insbesondere des ersten pulverförmigen Materials, während und/oder nach dem Behandeln in Schritt ii. und ggf. in Schritt iv. um mehr als 35 %, oder bevorzugt um mehr als 50 %, oder um mehr als 70 %, bezogen auf die Viskosität des jeweiligen pulverförmigen Materials vor dem Behandeln in Schritt ii. bzw. iv. erhöht gemessen bei einer Temperatur von 10 °C oberhalb der Schmelztemperatur des unbehandelten pulverförmigen Materials.

Bevorzugt überschreitet der Speichermodul G' des Endmaterials in der Schmelze nach Behandlung im Schritt ii. den Verlustmodul G" um mindestens 1%, oder bevorzugt um mindestens 5 %, oder bevorzugt um mindestens 10 %, oder bevorzugt um mindestens 20 %.

Bevorzugt weist mindestens eines der Polymere des ersten pulverförmigen Materials oder eines des mindestens einen weiteren pulverförmigen Materials ferner einen Betrag der komplexen Viskosität $|\eta^*|$ (bestimmt durch Viskosimetriemessung in der Schmelze mit einem Platte/Platte-Oszillationsviskosimeter gemäß ISO 6721-10 bei 200 °C und einer Scherrate von 1/s) von $\geq$ 10 mPas bis $\leq$ 10.000.000 mPas auf. Vorzugsweise beträgt $|\eta^*| \geq$ 50 mPas bis $\leq$ 5.000.000 mPas, oder bevorzugt $\geq$ 100 mPas bis $\leq$ 1.000.000 mPas.

Der Betrag der komplexen Viskosität $|\eta^*|$ beschreibt das Verhältnis der viskoelastischen Moduln $G'$ (Speichermodul) und $G"$ (Verlustmodul) zur Anregungsfrequenz $\omega$ in einer dynamisch-mechanischen Materialanalyse:

$$|\eta^*| = \sqrt{\left[\left(\frac{G'}{\omega}\right)^2 + \left(\frac{G''}{\omega}\right)^2\right]} = \frac{|G^*|}{\omega}.$$

In einer bevorzugten Ausgestaltung des Verfahrens vergrößert sich beim Behandeln in den Schritten ii. und/oder iv. der $G'$-Modul mindestens eines der behandelten pulverförmigen Materialien im Vergleich zu dem $G'$-Modul des jeweils unbehandelten pulverförmigen Materials in der Schmelze um mindestens 100 %, bevorzugt um mindestens 500 %, oder bevorzugt um mindestens 1000 %.

Bevorzugt reagieren beim Behandeln in den Schritten ii. und/oder iv. mindestens 10 %, bevorzugt mindestens 20 %, oder bevorzugt mindestens 30 %, oder bevorzugt mindestens 50 % der Isocyanatgruppen des ersten und/oder weiteren pulverförmigen Materials.

Bei dem Reagieren des mindestens einen Teils der reaktiven Gruppen a) und ggf. b) unter Erhalt des Endmaterials vergrößert sich bevorzugt die molekulare Masse des jeweiligen reagierenden Polymers um mindestens 200 g/mol, oder bevorzugt um mindestens 500 g/mol, oder bevorzugt um mindestens 1000 g/mol, oder bevorzugt um mindestens 5000 g/mol, jeweils bezogen auf die Molekularmasse des jeweiligen an der Reaktion beteiligten Polymers, wie dem ersten Polymer bzw. dem jeweiligen weiteren Polymers in dem ersten oder weiteren pulverförmigen Material, das reaktive Gruppen aufweist.

Darüber hinaus ist es möglich, dass die reaktiven Gruppen a) und/oder b) mit einem Material aus der Umgebungsatmosphäre - wie z.B. Wasser aus der Luftfeuchtigkeit - unter Vernetzung reagieren. Unter Vernetzung wird entweder eine Zunahme der molekularen Masse der Ausgangsmaterialien, also des ersten oder des weiteren Polymers verstanden oder die Zunahme des G'-Moduls, gemessen in der Schmelze, auf einen Wert höher als den G'-Modul des unbehandelten, also unvernetzten pulverförmigen Materials verstanden.

Neben den miteinander reagierenden reaktiven Gruppen a) und/oder b) kann das pulverförmige Material noch weitere reaktive Gruppen c) bis z) beinhalten, die sich chemisch von den Gruppen a) und b) unterscheiden und entweder auch mit a) und oder b) reagieren, eine andere Reaktion untereinander oder aber keine Reaktion eingehen.

Das erste pulverförmige Material oder das weitere pulverförmige Material kann mehr als ein Polymer beinhalten. Im Folgenden wird von einem Polymergemisch gesprochen, wenn das jeweilige pulverförmige Material mehr als ein Polymer beinhaltet. Bevorzugt weist das Polymer oder das Polymergemisch des ersten pulverförmigen Materials eine mittlere molekulare Masse in einem Bereich von 500 g/mol bis 1.000.000 g/mol, oder bevorzugt von 1000 g/mol bis 500.000 g/mol, oder bevorzugt in einem Bereich von 5000 bis 50.000 g/mol auf. Bevorzugt weist das Polymer oder das Polymergemisch des weiteren pulverförmigen Material eine mittlere molekulare Masse in einem Bereich von 1000 g/mol bis 5.000.000 g/mol, oder bevorzugt von 2000 g/mol bis 1000.000 g/mol, oder bevorzugt in einem Bereich von 8000 bis 100.000 g/mol auf.

Das Aufbringen des wenigstens einen ersten pulverförmigen oder des wenigstens einen weiteren pulverförmigen Materials in Schritt i. bzw. in Schritt iii. kann mittels jedes Verfahrens erfolgen, das ein flächenförmiges oder punktförmiges Aufbringen des jeweiligen pulverförmigen Materials auf einer Oberfläche ermöglicht.

Wenn im Folgenden lediglich von dem pulverförmigen Material gesprochen wird, so sind die Aussagen, die zu dem pulverförmigen Material gemacht werden, sowohl auf das erste pulverförmige Material als auch auf das wenigstens eine weitere pulverförmige Material anwendbar, es sei denn, dass explizit das erste oder das weitere pulverförmige Material benannt wird. Bevorzugt erfolgt das Aufbringen des pulverförmigen Materials, also sowohl des ersten als auch des weiteren pulverförmigen Materials, gemäß einem Verfahren ausgewählt aus der Gruppe bestehend aus Ausrollen, Sprühen, Drucken, Rieseln, Streichen, Rakeln, Schütten, Stempeln, Siebdrucken oder einer Kombination aus mindestens zwei hiervon. Für das Aufbringen des pulverförmigen Materials können bevorzugt Instrumente verwendet werden ausgewählt aus der Gruppe bestehend aus einem Drucker, einem Vorratsbehälter, einer Sprühdose, einem Pinsel, einer Walze, einer Transferfolie, einer Rolle oder einer Kombination von mindestens zwei hiervon, im Folgenden auch als Instrument zum Aufbringen genannt. Bevorzugt resultiert das Aufbringen des pulverförmigen Materials in Schritt i. oder iii, in einer flächenförmigen Lage des aufgebrachten pulverförmigen Materials auf der Oberfläche. Aufgrund der Behandlung mindestens eines Teils des pulverförmigen Materials der einzelnen Lage aus pulverförmigem Material in Schritt ii. und ggf. in Schritt iv. entsteht bevorzugt eine zusammenhängende Schicht des dreidimensionalen Objektes bestehend aus dem Endmaterial der jeweiligen Schicht. Unter zusammenhängender Schicht wird auch eine Schicht verstanden, die nur zum Teil das Endmaterial enthält, wobei bevorzugt mindestens ein Teil des Endmaterials zusammenhängend ausgebildet ist. Bevorzugt resultiert aus der Behandlung in Schritt ii. und ggf. in Schritt iv. auch eine Verbindung zwischen den einzelnen Schichten. Die Verbindung kann über physikalische oder chemische Bindungen erfolgen.

Alternativ oder alternierend kann das pulverförmige Material auch ortsaufgelöst auf die Oberfläche aufgebracht werden. Das pulverförmige Material kann innerhalb einer Lage oder von Lage zu Lage mehr als ein pulverförmiges Material beinhalten. Bevorzugt weist das erste pulverförmige Material oder das weitere pulverförmige Material mindestens zwei verschiedene Polymere, also mindestens das erste Polymer und ein weiteres Polymer, beispielsweise das zweite Polymer, auf. Das erste Polymer unterscheidet sich von dem jeweiligen weiteren Polymer mindestens in einem Parameter. Der Parameter ist bevorzugt ausgewählt aus der Gruppe bestehend aus der Anzahl von gleichen reaktiven Gruppen a) und/oder b) bis z), der Ausgestaltung der reaktiven Gruppen a) und/oder b) bis z), der molekularen Massen, der Schmelztemperatur oder der Glasübergangstemperatur, oder einer Kombination aus mindestens zwei hiervon.

In einer bevorzugten Ausführungsform des Verfahrens weist das erste pulverförmige Material oder das weitere pulverförmige Material Pulverpartikel auf, die mindestens zwei verschiedene Polymere beinhalten. Bevorzugt sind die beiden Polymere ausgewählt aus der Gruppe bestehend aus dem ersten Polymer plus dem zweiten Polymer, dem ersten Polymer plus einem ersten weiteren Polymer, dem ersten weiteren Polymer plus einem zweiten weiteren Polymer oder einer Kombination aus mindestens zwei hiervon. Bevorzugt weist das erste pulverförmige Material oder das weitere pulverförmige Material eine Anzahl an unterschiedlichen Polymeren in einem Bereich von 2 bis 20, oder bevorzugt in einem Bereich von 2 bis 10, oder bevorzugt in einem Bereich von 2 bis 5 auf.

Weist das erste pulverförmige oder das weitere pulverförmige Material mindestens zwei verschiedene Polymere auf, so beinhalten die Pulverpartikel des ersten pulverförmigen Materials oder des weiteren pulverförmigen Materials bevorzugt mindestens zwei unterschiedliche Partikelsorten, die jeweils eines der Polymere beinhalten. Bevorzugt weist das einzelne Pulverpartikel ein erstes Partikelkorn auf, das das erste Polymer beinhaltet und mehrere weitere Partikelkörner, die das weitere Polymer beinhalten, wobei die mehreren weiteren Partikelkörner bevorzugt auf der Oberfläche des ersten Partikelkorns angeordnet sind. Die mehreren weiteren Partikelkörner haften bevorzugt auf der Oberfläche des ersten Partikelkorns aufgrund von adhäsiven Kräften oder aufgrund von elektrostatischen Kräften. Bevorzugt weist ein Pulverpartikel des jeweiligen pulverförmigen Materials ein Gewichtsverhältnis des ersten Polymers zum mindestens einen weiteren Polymer in einem Bereich von 10:1 bis 1:100, oder bevorzugt in einem Bereich von 5:1 bis 1:50, oder bevorzugt in einem Bereich von 2:1 bis 1:10.

Bevorzugt wird mindestens eines der mindestens zwei Polymere in dem Pulverpartikel während des Behandelns in Schritt ii. aufgeschmolzen. Bevorzugt löst sich das mindestens eine weitere Polymer zumindest anteilmäßig in der Schmelze des ersten Polymers. Durch das mindestens anteilmäßige Lösen des mindestens einen weiteren Polymers in der Schmelze des mindestens einen ersten aufgeschmolzenen Polymers wird in einer bevorzugten Ausführungsform eine zumindest an der Partikeloberfläche nahezu homogene Mischung der mindestens zwei unterschiedlichen Polymere erreicht ohne, dass mehr als eines der mindestens zwei Polymere aufgeschmolzen sein müssen. Durch die homogene Mischung können reaktive Gruppen des aufgeschmolzenen Polymers mit denen des mindestens einen weiteren Polymers in Schritt ii. und ggf. in Schritt iv. miteinander reagieren, ohne dass beide Polymere aufgeschmolzen sein müssen. Alternativ ist es bevorzugt, dass beide Polymere beim Behandeln in Schritt ii. und ggf. in Schritt iv. aufgeschmolzen werden.

Bevorzugt werden die Belichtungsparameter für das Herstellverfahren zur Herstellung des dreidimensionalen Objektes so gewählt, dass

- das erste pulverförmige Material beim Erwärmen in Schritt ii. und/oder iv. aufschmilzt, das mindestens eine weitere pulverförmige Material aber nicht;
- sich das nicht aufgeschmolzene pulverförmige Material in der Schmelze des aufgeschmolzenen Materials löst;
- alle pulverförmigen Materialien in Schritt ii. und/oder iv. aufschmelzen.

In einer bevorzugten Ausführungsform haben die pulverförmigen Materialien unterschiedliche Schmelzpunkte, die sich zumindest um 1°C bevorzugt mindestens 4°C und besonders bevorzugt mindestens 10 °C unterscheiden.

Weist mindestens eines der pulverförmigen Materialien, beispielsweise das erste pulverförmige Material oder das weitere pulverförmige Material, mindestens zwei Polymere mit mindestens zwei unterschiedlichen reaktiven Gruppen ausgewählt aus a) bis z) oder unterschiedlichem Gehalt an reaktiven Gruppen, ausgewählt aus a) bis z) auf, so ist es bevorzugt, dass nahezu jedes Pulverpartikel mindestens zwei der mindestens zwei Polymere beinhaltet. Alternativ oder zusätzlich ist es bevorzugt, dass mindestens eines der pulverförmigen Materialien nur eine Sorte Polymer pro Pulverpartikel beinhaltet. Die Partikel sämtlicher pulverförmiger Materialien, die zum Aufbau des erfindungsgemäßen dreidimensionalen Objektes verwendet werden, weisen bevorzugt eine mittlere Partikelgröße in einem Bereich von 0,1 bis 1000 μm, oder bevorzugt in einem Bereich von 1 bis 700 μm, oder bevorzugt in einem Bereich von 2 bis 500 μm auf. Die Partikelgrößenverteilungen werden dabei zum Beispiel mikroskopisch durch Auszählverfahren oder durch dynamische Lichtstreuung ermittelt. Bevorzugt werden die Partikelgrößenverteilungen durch Lichtstreuung ermittelt. Weist das pulverförmige Material mehr als ein Polymer auf, so weist bevorzugt jedes Pulverpartikel des pulverförmigen Materials ein Partikelkorn beinhaltend das erste Polymer auf, das von kleineren Partikelkörnern des mindestens einen weiteren Polymers umgeben ist. Die Größenverhältnisse des Partikelkorns des ersten pulverförmigen Materials zu den Partikelkörnern des mindestens einen weiteren Partikelkörnern des mindestens einen weiteren pulverförmigen Materials liegt bevorzugt in einem Bereich von 100:1 bis 1:1, oder bevorzugt in einem Bereich von 70:1 bis 2:1, oder bevorzugt in einem Bereich von 50:1 zu 3:1.

In einer weiteren bevorzugten Ausführungsform beinhaltet das erste pulverförmige Material ausschließlich das erste Polymer. Weiterhin bevorzugt weist ein weiteres pulverförmiges Material, beispielsweise ein drittes pulverförmiges Material, ausschließlich ein drittes Polymer auf, das sich mindestens durch seine Art oder Anzahl an reaktiven ausgewählt aus Gruppe a) bis z) von dem ersten Polymer unterscheidet.

In Schritt i. und ggf. in Schritt iii. wird das pulverförmige Material bevorzugt ortsaufgelöst auf die Oberfläche aufgebracht. Bevorzugt findet das ortsaufgelöste Aufbringen des pulverförmigen Materials mit Hilfe einer Maßnahme statt ausgewählt aus der Gruppe bestehend aus einer gezielten Anordnung des Instruments zum Aufbringen des pulverförmigen Materials, einer oder mehrerer Masken oder Schablonen, einem relativ zur zu beschichtenden Oberfläche beweglichen Druckkopf, einer relativ zum Instrument zum Aufbringen beweglichen Oberfläche, durch Transfer einer Pulverschicht durch einen Stempel oder einer Folie, durch ortsaufgelöste elektrostatische Bindung des Pulvers, durch Anordnung von mehreren Kammern, die unterschiedliche pulverförmige Materialien beinhalten oberhalb der Oberfläche oder einer Kombination aus mindestens zwei hiervon. Bevorzugt ist die Auflösung der Ortsauflösung im Bereich der mittleren Partikelgröße des pulverförmigen Materials. Weiterhin bevorzugt liegt die Auflösung der Ortsauflösung des Aufbringens des pulverförmigen Materials im Bereich von 0,01 mm bis 2 cm, oder bevorzugt in einem Bereich von 0,05 mm bis 1 cm, oder bevorzugt in einem Bereich von 0,1 mm bis 5 mm. Bevorzugt wird das pulverförmige Material auch bei dem ortsaufgelösten Aufbringen in Schritt i. und ggf. in Schritt iii. durch das Behandeln in Schritt ii. und ggf. in Schritt iv. in eine zusammenhängende Schicht aus Endmaterial umgewandelt.

Bevorzugt weist das erfindungsgemäße Verfahren nach den Schritten i. und ii. beziehungsweise ggf. den Schritten iv. und v. die folgenden weiteren Schritte auf:

I) Kontaktieren des in Schritt i. und ggf. in Schritt iii. behandelten Teils an pulverförmigem Material mit einem Träger, so dass das mindestens eine behandelte pulverförmige Material mit dem Träger verbunden wird;

II) Entfernen des Trägers einschließlich dem mindestens einen mit dem Träger verbundenen Material von dem Substrat;

III) Auftragen einer weiteren Lage mit pulverförmigem Material, ausgewählt aus der Gruppe bestehend aus dem ersten pulverförmigen Material, dem zweiten pulverförmigen Material, einem ersten weiteren pulverförmigen Material, einem weiteren pulverförmigen Material oder eine Mischung aus mindestens zwei hieraus, auf die Oberfläche;

IV) Bestrahlen eines ausgewählten Teils der in Schritt III) aufgetragenen Lage, entsprechend einem weiteren ausgewählten Querschnitt des Objekts, mit einem Energiestrahl oder mehreren Energiestrahlen, so dass die Partikel des pulverförmigen Materials im ausgewählten Teil zumindest teilweise aufgeschmolzen werden und mindestens ein zumindest teilweise aufgeschmolzenes Volumen erhalten wird;

V) Kontaktieren des mindestens einen in Schritt IV) erhaltenen Volumens mit dem Träger oder einem zuvor mit dem Träger verbundenen Volumen oder zuvor mit dem Träger verbundenen Volumina, so dass das in Schritt IV) erhaltene Volumen mit mindestens einem der zuvor mit dem Träger verbundenen Volumina oder dem Träger verbunden wird;

VI) Entfernen des Trägers einschließlich mit der Träger verbundenen Volumina von dem Substrat;

VII) Wiederholen der Schritte III) bis VI), bis der Gegenstand gebildet ist.

Der Träger kann aus jedem Material aufgebaut sein, das der Fachmann dazu auswählen würde, um das behandelte pulverförmige Material an sich binden zu können. Bevorzugt beinhaltet der Träger eine Kontaktoberfläche, die eine höhere Adhäsion zu dem behandelten pulverförmigen Material aufweist als die Oberfläche auf der das pulverförmige Material bereitgestellt wird.

Die Oberfläche ist bevorzugt entweder die Oberfläche einer Plattform oder einer Folie, auf oder oberhalb derer das dreidimensionale Objekt hergestellt werden soll oder eine Schicht des unbehandelten pulverförmigen Materials oder eine bereits aufgebrachte und behandelte Schicht nach Schritt ii. oder ggf. Schritt iv. auf die in Schritt iii. oder ggf. Schritt v. erneut pulverförmiges Material aufgebracht wird. Bevorzugt ist die Plattform ein Bestandteil eines Bauraumes, in dem das dreidimensionale Objekt gebildet werden soll. Der Bauraum ist bevorzugt Bestandteil einer Maschine ausgewählt aus der Gruppe bestehend aus Geräten, die nach dem Selektiven Lasersinter-Verfahren - wie z.B. von Herstellern wie EOS, Farsoon, 3D-Systems oder Sharebot - oder nach dem High-Speed-Sintering-Verfahren - wie z.B. dem Multijet-Fusion-Verfahren der Firma HP - arbeiten.

Die Oberfläche, auf die die erste Schicht des ersten pulverförmigen Materials aufgebracht wird, kann jede Oberfläche sein, die der Fachmann als Oberfläche hierfür auswählen würde. Bevorzugt ist das Material der Oberfläche ausgewählt aus der Gruppe bestehend aus Metall, Keramik, Glas, Kunststoff, Textil, Leder, Holz oder einer Kombination aus mindestens zwei hiervon. Das Metall ist bevorzugt ausgewählt aus der Gruppe bestehend aus Eisen, Stahl, Aluminium, Titan, Kupfer, Silizium oder einer Kombination aus mindestens zwei hiervon. Der Kunststoff kann jeder Kunststoff sein, den der Fachmann hierfür verwenden würde.

Bevorzugt ist der Kunststoff ausgewählt aus der Gruppe bestehend aus Polyetheretherketon (PEEK), Polyetheramidketon (PEAK), Polyimid (PI), Teflon, Silikon, Silikonkautschuk, Fluorkautschuk, Fluorsilikonkautschuk. oder andere bevorzugt hochschmelzende Thermoplaste oder hitzebeständige Duroplaste sowie Mischungen aus mindestens zwei hiervon. Bevorzugt ist die Oberfläche mittels gängiger Methoden veredelt, um spezifische, gewünschte Oberflächenspannungen, Haftungen sowie thermische / chemische Stabilität sowie Temperaturleitfähigkeiten zu realisieren. Handelt es sich in Schritt i. und ggf. in Schritt iii. beim Aufbringen um ein pulverförmiges Material, das auf eine zuvor aufgebrachte Schicht an pulverförmigem Material aufgebracht wurde und gegebenenfalls in Schritt ii. bzw. ggf. in Schritt iv. behandelt wurde, so stellt diese zuvor aufgebrachte Schicht die Oberfläche für das pulverförmige Material dar, das in den Wiederholungsschritten v. aufgebracht wird. Anders ausgedrückt, stellt bevorzugt das Endmaterial jeder in den Schritten i. bzw. ggf. in Schritten iii. aufgebrachten und in den Schritten ii. bzw. ggf. Schritten iv. behandelten pulverförmigen Materials die Oberfläche für die jeweils folgende Schicht dar. Es ist jedoch auch möglich, dass das Endmaterial einer aufgebrachten Schicht die Oberfläche zum Aufbringen einer weiteren Schicht pulverförmigen Materials in einem Wiederholungsschritt v. darstellt, zwischen denen zumindest zum Teil mindestens eine weitere Schicht pulverförmigen Materials aufgebracht wurde. Weiterhin ist es möglich, dass das Aufbringen pulverförmigen Materials in Schritt i. bzw. ggf. iii. auf Teilen von Oberflächen verschiedener darunter liegender Schichten erfolgt.

Der Teil der Oberfläche, der durch das Aufbringen in Schritt i. und ggf. in Schritt iii. des pulverförmigen Materials, sei es das erste oder eines des mindestens einen weiteren pulverförmigen Materials, mit dem pulverförmigen Material bedeckt wird, liegt bevorzugt in einem Bereich von 1 bis 100 %, oder in einem Bereich von 5 bis 95 %, oder bevorzugt in einem Bereich von 10 bis 90 %, bezogen auf die Gesamtoberfläche der Oberfläche. Die Bestimmung oder Berechnung der Gesamtoberfläche der Oberfläche ergibt sich aus der für das pulverförmige Material zugänglichen Teils der Oberfläche. Befindet sich beispielsweise ein Teil der Oberfläche der zu beschichtenden Oberfläche außerhalb des Bauraums oder ist er durch andere Schichten bedeckt, so zählt dieser Teil nicht zur Gesamtoberfläche der Oberfläche. Weiterhin weist das jeweilige Endmaterial eine Gesamtoberfläche auf, die deutlich kleiner ist als die Gesamtoberfläche des zu ihrer Herstellung aufgebrachten pulverförmigen Materials. So zählt zu der Gesamtoberfläche des jeweiligen Endmaterials lediglich der Teil der entstehenden Oberfläche, der nicht in Kontakt mit einer darunter, daneben oder darüber liegenden Schicht bedeckt ist. Bevorzugt stellen sämtliche Teile der Oberfläche des Endmaterials, die nicht in Kontakt mit Endmaterial einer weiteren Schicht steht die Gesamtoberfläche des jeweiligen Endmaterials dar.

Bevorzugt weist die Oberfläche auf die in Schritt i. pulverförmiges Material aufgebracht wird, eine Gesamtoberfläche in einem Bereich von 0,01 bis 1000 m$^2$, oder bevorzugt in einem Bereich von 0,02 bis 500 m$^2$, oder bevorzugt in einem Bereich von 0,05 bis 100 m$^2$ auf.

Das Behandeln kann jedes Behandeln des pulverförmigen Materials sein, das dazu führt, dass wenigstens ein Teil des pulverförmigen Materials zu dem jeweiligen Endmaterial und schließlich zu dem dreidimensionalen Objekt umgeformt wird. Bevorzugt ist das Behandeln ausgewählt aus der Gruppe bestehend aus einer Behandlung durch Wärme, einer Behandlung durch elektromagnetische Strahlung, bevorzugt durch Infrarot-Strahlung, einer Behandlung durch Elektronenstrahlung, einer Behandlung durch Druck oder einer Kombination aus mindestens zwei hiervon.

Mindestens ein Teil des Verfahren, aber zumindest das Behandeln in Schritt ii. bzw. iv. erfolgt bevorzugt in einem Bauraum, der eine Temperatur in einem Bereich von 20 bis 350 °C, oder bevorzugt in einem Bereich von 25 bis 300 °C, oder bevorzugt in einem Bereich von 30 bis 250 °C, oder bevorzugt in einem Bereich von 40 bis 200 °C aufweist. Der Bauraum kann jeder Raum sein, der eine Verarbeitung des pulverförmigen Materials zu dem Endmaterial oder zu dem dreidimensionalen Objekt ermöglicht. Das Einbringen des pulverförmigen Materials in den beheizten oder unbeheizten Bauraum ist bevorzugt nicht Teil des Behandelns in Schritt ii. bzw. iv.. Bevorzugt liegt die Temperatur des Bauraums unterhalb der Schmelztemperatur oder der Erweichungstemperatur mindestens eines der Polymere, die die pulverförmigen Materialien beinhalten.

Bevorzugt weist der Bauraum die Oberfläche auf, auf die das pulverförmige Material in Schritt i. oder iii. aufgebracht wird. Bevorzugt weist der Bauraum Wände um die Oberfläche auf, die als Begrenzung des pulverförmigen Materials beim Aufbringen des Materials in Schritt i. oder iii. dient. Bevorzugt ist das pulverförmige Material oder sind die pulverförmigen Materialien bei der Bauraumtemperatur weiterhin pulverförmig. Während des Behandelns wird das pulverförmige Material aufgeschmolzen. Bevorzugt wird das pulverförmige Material während des Behandelns in Schritt ii. auf eine Temperatur gebracht, die in einem Bereich von 1 bis 200 °C, oder bevorzugt in einem Bereich von 5 bis 180 °C, oder bevorzugt in einem Bereich von 10 bis 160 °C, oder bevorzugt in einem Bereich von 15 bis 150 °C, oder bevorzugt in einem Bereich von 20 bis 120 °C oberhalb der Erweichungstemperatur oder der Schmelztemperatur des pulverförmigen Materials liegt. Bevorzugt weist das geschmolzene pulverförmige Material einen Betrag der komplexen Viskosität $|\eta^*|$ (bestimmt durch Viskosimetriemessung in der Schmelze mit einem Platte/Platte-Oszillationsviskosimeter gemäß ISO 6721-10 und einer Scherrate von 1/s) in einem Bereich von $\geq$ 10 mP·as bis $\leq$ 10.000.000 mPa·s, oder bevorzugt in einem Bereich von 50 mPas bis 5.000.000 mPas, oder bevorzugt in einem Bereich von 100 mPas bis 1.000.000 mPas, oder bevorzugt in einem Bereich von 500 mPas bis 100.000 mPas auf.

Das Behandeln durch Wärme erfolgt bevorzugt durch die Bestrahlung des pulverförmigen Materials durch einen Energiestrahl. Bevorzugt findet das Bestrahlen eines ausgewählten Teils der Lage, entsprechend einem Querschnitt des zu bildenden dreidimensionalen Objektes, mit einem Energiestrahl, so dass die pulverförmigen Partikel im ausgewählten Teil verbunden werden. Diese Verfahrensform kann als selektives Sinterverfahren, insbesondere als selektives Lasersinterverfahren (SLS) angesehen werden. Der Energiestrahl zum Verbinden der Teilchen kann ein Strahl elektromagnetischer Energie wie zum Beispiel ein "Lichtstrahl" von UV- bis IR-Licht sein. Vorzugsweise ist der Energiestrahl ein Laserstrahl, besonders bevorzugt mit einer Wellenlänge zwischen 600 nm und 15 $\mu$m. Der Laser kann als Halbleiterlaser oder als Gas Laser ausgeführt sein. Denkbar ist auch ein Elektronenstrahl. Das Verbinden der Partikel im bestrahlten Teil der Partikelschicht erfolgt üblicherweise durch (teilweises) Aufschmelzen eines (teil)kristallinen Materials und Verbinden des Materials beim Abkühlen. Es ist aber auch möglich, dass andere Gestaltumwandlungen der Partikel wie ein Glasübergang, das heißt das Erwärmen des Materials auf eine Temperatur oberhalb der Glasübergangstemperatur, eine Verbindung der Partikel untereinander bewirken. Die Energiequelle strahlt bevorzugt Licht in einem Wellenlängenbereich von 200 bis 2000 nm, oder bevorzugt in einem Wellenlängenbereich von 130 bis 1900 nm, oder bevorzugt in einem Wellenlängenbereich von 160 bis 1800 nm auf. Beim Aufschmelzen von pulverförmigem Material wird ein zumindest teilweise aufgeschmolzenes Volumen erhalten. Dabei wird im Folgenden der Begriff aufgeschmolzenes Volumen ohne weitere Differenzierung für jede Lage an pulverförmigem Material verwandt.

Neben dem Aufschmelzen und Verbinden der pulverförmigen Partikel zu dem aufgeschmolzenen Volumen in Form des SLS Verfahrens ist es weiterhin ein Ziel der Behandlung bzw. des Behandelns in den Schritten ii. und ggf. iv. eine Reaktion, insbesondere eine chemische Reaktion, zwischen mindestens zwei gleichen oder zwei unterschiedlichen Gruppen der mindestens zwei reaktiven Gruppen a) und/oder b) des ersten und/oder des weiteren Polymers in den pulverförmigen Materialien zu erzeugen. Aufgrund dieser Reaktion findet bevorzugt die Erhöhung des E-Moduls in dem behandelten Material, das das Endmaterial darstellt im Vergleich zu dem pulverförmigen Material vor der Behandlung in Schritt ii. oder iv. statt. Bevorzugt wird durch das Behandeln in Schritt ii. und ggf. in Schritt iv. das pulverförmige Material an den Stellen der Behandlung in ein zusammenhängendes Endmaterial umgewandelt, wobei die in den Wiederholungsschritten v. entstehenden Endmaterialien miteinander so in Kontakt stehen, dass sie nach Durchführung des letzten Wiederholungsschrittes v. das dreidimensionale Objekt bilden. Bevorzugt ist das dreidimensionale Objekt einstückig. Es ist jedoch auch vorstellbar, dass bei der Wiederholung der Schritte i. und ii. mindestens zwei nicht miteinander verbundene Teile des dreidimensionalen Objektes entstehen, die beispielsweise in einem weiteren Schritt iv. miteinander zu dem dreidimensionalen Objekt zusammengefügt werden können, oder mehrere einzelne dreidimensionale Objekte in einem Bauprozess entstehen.

Bevorzugt weist das Endmaterial verschiedene Segmente mit unterschiedlichen Materialeigenschaften auf. Bevorzugt weist das Endmaterial mindestens zwei verschiedene, regelmäßig verteilte homogene Materialsegmente auf, die sich bevorzugt in einem Bereich von 2 bis 100.000.000-fach, oder bevorzugt in einem Bereich von 10 bis 10.000.000-fach, oder bevorzugt in einem Bereich von 100 bis 1.000.000-fach, oder bevorzugt in einem Bereich von 1000 bis 100.000-fach wiederholen. Die Segmente weisen bevorzugt eine Größe in einem Bereich von 5 nm³ bis 10 cm³, oder bevorzugt in einem Bereich von 10 nm³ bis 1 cm³, oder bevorzugt in einem Bereich von 100 nm³ bis 0,5 cm³ auf. Diese homogene Verteilung von chemisch inhomogenen bzw. unterschiedlichen Materialsegmenten kann zur Einstellung von Schlagzähigkeit und Modul innerhalb des dreidimensionalen Objektes gezielt genutzt werden.

Bevorzugt ist die mittlere Glasübergangstemperatur Tg des erhaltenen Endmaterials um mehr als 1 °C, oder bevorzugt um mehr als 3 °C, oder bevorzugt um mehr als 5 °C höher als die gemittelte Tg der Einsatzkomponenten in Form der jeweiligen pulverförmigen Materialien bzw. der jeweiligen Polymer, die in den pulverförmigen Materialien enthalten sind.

Bevorzugt ist der Kristallisationsgrad des Endmaterials niedriger als der Kristallisationsgrad der Ausgangskomponenten in Form des jeweiligen pulverförmigen Materials bzw. der darin enthaltenen Polymere. Bevorzugt verringert sich der Kristallisationsgrad des Endmaterials um <1%, oder bevorzugt um < 3%, oder bevorzugt um < 5%, bezogen auf den Kristallisationsgrad des jeweiligen pulverförmigen Materials aus dem das Endmaterial gebildet wurde. Der Kristallisationsgrad lässt sich bei Kenntnis der Schmelzenthalpie eines Materials aus der Fläche unter der Schmelzkurve einer DSC (differential scanning calorimetry) Messung bestimmen. Eine Möglichkeit der Bestimmung von DSC Schmelzkurven wird von Dr. Markus Schubnell in der Veröffentlichung zu finden unter https://de.mt.com/dam/mt_ext_files/Editorial/Simple/0/polymere_kristallinitaetdsctausercom13ds1213 .pdf in der User-Com 1/2001. Das erfindungsgemäße Produkt zeichnet sich dadurch aus, dass die Fläche unter der Schmelzkurve gegenüber den Ausgangsstoffen messbar kleiner wird.

Das Endmaterial weist bevorzugt einen Gehalt an reaktiven Gruppen a) bis z) in einem Bereich von 0,1 bis 80 mol-%, oder bevorzugt in einem Bereich von 1 bis 60 mol-%, oder bevorzugt in einem Bereich von 2 bis 50 mol-%, oder bevorzugt in einem Bereich von 5 bis 40 mol.-%, bezogen auf die molare Menge der reaktiven Gruppen a) bis z) in dem jeweiligen pulverförmigen Material vor der Behandlung auf. Das Endmaterial weist bevorzugt einen Gehalt an reaktiven Gruppen a) in einem Bereich von 0,1 bis 60 mol-%, oder bevorzugt in einem Bereich von 0,2 bis 50 mol-%, oder bevorzugt in einem Bereich von 0,5 bis 40 mol-%, oder bevorzugt in einem Bereich von 1 bis 30 mol.-%, bezogen auf die molare Menge der reaktiven Gruppen a) in dem jeweiligen pulverförmigen Material vor der Behandlung auf.

Die Anzahl der Wiederholungen der Schritte i. und ii. sowie ggf. der Schritte iii. und iv. in Schritt v., auch Wiederholschritte v. genannt, liegt bevorzugt in einem Bereich von 3 bis 1000000, oder bevorzugt in einem Bereich von 10 bis 700000, oder bevorzugt in einem Bereich von 100 bis 500000. Bei den Wiederholschritten kann jede Kombination von ersten pulverförmigem Material und mindestens einem weiteren pulverförmigen Material Anwendung finden. Es ist möglich, dass sich jeweils eine Schicht aus erstem pulverförmigem Material mit einer Schicht aus mindestens einem weiteren pulverförmigem Material abwechselt. Es können aber auch mehrere Schichten von ersten pulverförmigem Material auf mehrere Schichten mindestens eines weiteren pulverförmigem Materials folgen und umgekehrt.

Es ist bevorzugt, dass innerhalb des dreidimensionalen Objektes der Gehalt an reaktiven Gruppen a) bis z) innerhalb der Wiederholschritte v. variieren kann. Bevorzugt weicht der Gehalt an reaktiven Gruppen a) bis z) in dem dreidimensionalen Objekt zwischen den verschiedenen Endmaterialien entstanden durch die Wiederholschritte v. in einem Bereich von 0,1 bis 40 mol.-%, oder bevorzugt in einem Bereich von 0,5 bis 30 mol.-%, oder bevorzugt in einem Bereich von 1 bis 20 mol.-%, bezogen auf die Schicht mit dem geringsten Gehalt an reaktiven Gruppen a) bis z).

Beim Behandeln in Schritt ii. und ggf. in Schritt iv. wird bevorzugt ein Teil des in Schritt i. bzw. in Schritt iii. aufgebrachten pulverförmigen Materials in einem Bereich von 1 bis 99 % behandelt, oder bevorzugt in einem Bereich von 5 bis 95 %, oder bevorzugt in einem Bereich von 10 bis 90 %, oder bevorzugt in einem Bereich von 20 bis 80 %, bezogen auf die in Schritt i. bzw. ggf. in Schritt iii. aufgebrachte Menge an pulverförmigem Material. Das Behandeln mindestens eines Teils des pulverförmigen Materials in Schritt ii. und gegebenenfalls in Schritt iv. erfolgt bevorzugt ortsaufgelöst. Von einem ortsaufgelösten Behandeln im Sinne der Erfindung wird dann gesprochen, wenn nur ein ausgewählter Teil des pulverförmigen Materials behandelt wird. Die ortsaufgelöste Behandlung dieses ausgewählten Teils des pulverförmigen Materials wird bevorzugt mit einer Präzision in jede Raumrichtung in einem Bereich von 0,01 bis 2 mm, oder bevorzugt in einem Bereich von 0,05 bis 1,5 mm, oder bevorzugt in einem Bereich von 0,1 bis 1 mm durchgeführt. Insbesondere wird das Behandeln in Schritt ii. und gegebenenfalls in Schritt iv. durchgeführt, wenn die Lage an pulverförmigem Material in Schritt i. und gegebenenfalls in Schritt iii. flächenförmig erfolgt ist. Aber auch, wenn das Aufbringen des pulverförmigen Materials in Schritt i. und gegebenenfalls in Schritt iii. bereits ortsaufgelöst erfolgt ist, kann ein ortsaufgelöstes Behandeln des pulverförmigen Materials in Schritt ii. und gegebenenfalls in Schritt iv. zusätzlich erfolgen.

Bevorzugt wird das Behandeln in Schritt ii. und ggf. in Schritt iv. zumindest teilweise zeitaufgelöst durchgeführt. Unter zeitaufgelöst im Sinne der Erfindung wird verstanden, dass gezielt zu bestimmten Zeitpunkten mindestens zwei unterschiedliche Punkte des in Schritt i. oder iii. aufgebrachten pulverförmigen Materials behandelt werden. Als unterschiedliche Punkte, werden Areale des pulverförmigen Materials bezeichnet, die mindestens einen Abstand in einem Bereich von 0,01 bis 10 mm, oder bevorzugt in einem Bereich von 0,05 bis 7 mm, oder bevorzugt in einem Bereich von 0,1 bis 5 mm haben. Weiterhin kann unter zeitaufgelöst auch verstanden werden, dass unterschiedliche Punkte des in Schritt i. oder iii. aufgebrachten pulverförmigen Materials unterschiedliche lange behandelt werden. Bevorzugt ist die unterschiedlich lange Behandlung in einem Bereich von 0,00001 bis 2 s, oder bevorzugt in einem Bereich von 0,00005 bis 1,5 s, oder in einem Bereich von 0,0001 bis 1 s.

Weiterhin ist es möglich, dass unterschiedliche Punkte des in Schritt i. oder iii. aufgebrachten pulverförmigen Materials mit unterschiedlichen Intensitäten an Strahlung behandelt werden. Bevorzugt ist die unterschiedlich Intensität der Strahlung in einem Bereich von 1 W/mm$^2$ bis 1000 kW/mm$^2$, oder bevorzugt 100 W/mm$^2$ bis 800 kW/mm$^2$, oder bevorzugt 1000 W/mm$^2$ bis 700 kW/mm$^2$.

Die Schicht des nach Schritt ii. erhaltenen Endmaterials weist eine Dicke in einem Bereich von 0,01 bis 10 mm oder bevorzugt in einem Bereich von 0,05 bis 2 mm, oder bevorzugt in einem Bereich von 0,1 bis 1 mm. Die Schicht kann jede Form annehmen, die der Fachmann hierfür auswählen würde. Die Schicht weist bevorzugt mindestens eine zusammenhängende Linie an Endmaterial der jeweiligen Schicht auf. Es kann sich aber auch um eine zusammenhängende flächenförmige Schicht an Endmaterial handeln oder um eine Schicht mit Aussparungen.

Bevorzugt weist das erste pulverförmige Material oder das mindestens eine weiter pulverförmige Material eine Anzahl an reaktiven Gruppen a) in einem Verhältnis von 1:100 bis 10:1 besonders bevorzugt in einem Verhältnis von 1:10 bis 5:1, oder bevorzugt in einem Verhältnis von 1:8 bis 2:1 zu der Anzahl an reaktiven Gruppen b) bis z) auf.

Bevorzugt reagieren die reaktiven Gruppen a) bis z) der pulverförmigen Materialien ohne Abspaltung von weiteren Molekülen unter Ausbildung von Bindungen ausgewählt aus der Gruppe bestehend aus einer C-C Bindung, einer C-O Bindung, einer N-C Bindung oder einer S-C Bindung oder einer Mischung von mindestens zwei hiervon.

Das pulverförmige Material beinhaltet bevorzugt einen Katalysator, der die durch die Behandlung initiierte Reaktion der reaktiven Gruppen a) mit a) bis z) katalysiert. Unter Katalysieren wird sowohl die Initiierung als auch die Beschleunigung der jeweiligen Reaktion zwischen der ersten reaktiven Gruppe a) mit einer weiteren Gruppe a) oder mindestens einer der weiteren reaktiven Gruppe b) bis z) verstanden. Die reaktive Gruppe a) und die weitere reaktive Gruppe b) bis z) können dabei innerhalb eines Moleküls des Polymers in dem pulverförmigen Material angeordnet sein oder in zwei unterschiedlichen Molekülen. Sind die mindestens zwei reaktiven Gruppen a) und a) bis z), die miteinander reagieren in zwei unterschiedlichen Molekülen des Polymers angeordnet so findet durch die Reaktion dieser beiden reaktiven Gruppen a) und einer Gruppe aus a) bis z) eine Molmassenvergrößerung in dem pulverförmigen Material zum Endmaterial hin statt. Bevorzugt werden die Katalysatoren so ausgewählt, dass die gewünschten Reaktionen schneller in der Schmelze als im Pulverzustand verlaufen.

Bevorzugte Katalysatoren für eine Reaktion zwischen einer Isocyanat-Gruppe und einer isocyanatreaktiven Gruppe sind dem Experten wohlgekannt und beispielhaft ausgewählt aus der Gruppe bestehend aus Zinnoctoat, Zinndioctoat, Zinkdioctoat, Dibutylzinndilaurat, Dimethylbis[(1-oxoneodecyl)oxy]stannan, Dimethylzinndicarboxylat, Zirconium-bis(ethyl-hexanoat), Zirconiumacteylacetonat oder tertiäre Aminen wie beispielsweise 1,4-Diazabi-cyclo[2.2.2]octan, Diazabicyclononan, Diazabicycloundecan, 1,1,3,3-Tetramethylguanidin, 1,3,4,6,7,8-Hexahydro-1-methyl-2H-pyrimido(1,2-a)pyrimidin. Die Reaktion von Isoyanaten untereinander kann katalysiert werden durch zum Beispiel einfache tertiäre Amine, wie z. B. Triethylamin, Tributylamin, N,N-Dimethylanilin, N-Ethylpiperidin oder N, N'-Dimethylpiperazin. Geeignete Katalysatoren sind auch die in der GB 2 221 465 beschriebenen tertiären Hydroxyalkylamine, wie z. B. Triethanolamin, N-Methyl-diethanolamin, Dimethylethanolamin, N-Isopropyldiethanolamin und 1-(2-Hydroxyethyl)pyrrolidin, oder die aus der GB 2 222 161 bekannten, aus Gemischen tertiärer bicyclischer Amine, wie z. B. DBU, mit einfachen niedermolekularen aliphatischen Alkoholen bestehenden Katalysatorsysteme. Als Isocyanat-Trimerisierungskatalysatoren ebenfalls geeignet ist eine Vielzahl unterschiedlicher Metallverbindungen. Geeignet sind beispielsweise die in der DE-A 3 240 613 als Katalysatoren beschriebenen Oktoate und Naphthenate von Mangan, Eisen, Cobalt, Nickel, Kupfer, Zink, Zirkonium, Cer oder Blei oder deren Gemische mit Acetaten von Lithium, Natrium, Kalium, Calcium oder Barium, die aus DE-A 3 219 608 bekannten Natrium- und KaliumSalze von linearen oder verzweigten Alkancarbonsäuren mit bis zu 10 C-Atomen, wie z. B. von Propionsäure, Buttersäure, Valeriansäure, Capronsäure, Heptansäure, Caprylsäure, Pelargonsäure, Caprinsäure und Undecylsäure, die aus der EP-A 0 100 129 bekannten Alkali- oder Erdalkalimetallsalze von aliphatischen, cycloaliphatischen oder aromatischen Mono- und Polycarbonsäuren mit 2 bis 20 C-Atomen, wie z. B. Natrium- oder Kaliumbenzoat, die aus der GB-PS 1 391 066 und GB-PS 1 386 399 bekannten Alkaliphenolate, wie z. B. Natrium- oder Kaliumphenolat, die aus der GB 809 809 bekannten Alkali- und Erdalkalioxide, -hydroxide, -carbonate, -alkoholate und -phenolate, Alkalimetallsalze von enolisierbaren Verbindungen sowie Metallsalze schwacher aliphatischer bzw. cycloaliphatischer Carbonsäuren, wie z. B. Natriummethoxid, Natriumacetat, Kaliumacetat, Natriumacetoessigester, Blei-2-ethylhexanoat und Bleinaphthenat, die aus der EP-A 0 056 158 und EP-A 0 056 159 bekannten, mit Kronenethern oder Polyetheralkoholen komplexierten basischen Alkalimetallverbindungen, wie z. B. komplexierte Natrium- oder Kaliumcarboxylate, das aus der EP-A 0 033 581 bekannte Pyrrolidinon-Kaliumsalz, die aus der Anmeldung EP 13196508.9 bekannten ein- oder mehrkernigen Komplexverbindung von Titan, Zirkonium und/oder Hafnium, wie z. B. Zirkoniumtetra-n-butylat, Zirkoniumtetra-2-ethylhexanoat und Zirkoniumtetra-2-ethylhexylat, sowie Zinnverbindungen der in European Polymer Journal, Vol. 16, 147 - 148 (1979) beschriebenen Art, wie z. B. Dibutylzinndichlorid, Diphenylzinndichlorid, Triphenylstannanol, Tributylzinnacetat, Tributylzinnoxid, Zinnoctoat, Dibutyl(dimethoxy)stannan und Tributylzinnimidazolat.

Handelt es sich bei der Reaktion von reaktiven Gruppen a) bis z) um gleichartige reaktive Gruppen, beispielsweise ausnahmslos um reaktive Gruppen a), die mit einander reagieren, so können im Fall von Di- bzw.- Trimerisierungsreaktionen von Isocyanatgruppen Katalysatoren eingesetzt werden, wie sie in der EP Anmeldung EP 15164520.7 beschrieben werden.

Bevorzugt werden Katalysatoren in einer Menge von > 0,001 Gew.-% und < 5 Gew.-%oder bevorzugt in einer Menge von > 0,01 Gew.-% < 1,5 Gew.-%, bezogen auf das Gesamtgewicht des jeweiligen pulverförmigen Materials eingesetzt. Bevorzugt ist der Katalysator dadurch charakterisiert, dass er die Reaktion gegenüber der unkatalysierten Reaktion mindestens um den Faktor 2, oder bevorzugt den Faktor 3, oder bevorzugt um den Faktor 5 beschleunigt.

In einer bevorzugten Ausgestaltung des Verfahrens beinhaltet das erste pulverförmige Material eine Menge an reaktiven Gruppen in einem Bereich von 0,1 bis 25 Gew.-%, oder bevorzugt in einem Bereich von 0,5 bis 20, oder bevorzugt in einem Bereich von 1 bis 15, oder bevorzugt in einem Bereich von 1,5 bis 10, oder bevorzugt in einem Bereich von 1,8 bis 8, bezogen auf das Gesamtgewicht des jeweiligen Moleküls, das die reaktiven Gruppen enthält.

Bevorzugt beinhaltet das mindestens eine weitere pulverförmige Material eine Menge an reaktiven Gruppen in einem Bereich von 0,1 bis 25 Gew.-%, oder bevorzugt in einem Bereich von 0,5 bis 20, oder bevorzugt in einem Bereich von 1 bis 15, oder bevorzugt in einem Bereich von 1,5 bis 10, oder bevorzugt in einem Bereich von 1,8 bis 8, bezogen auf das Gesamtgewicht des jeweiligen Moleküls, das die reaktiven Gruppen enthält.

Weist das erste pulverförmige Material oder das weitere pulverförmige Material mehr als einen Typ reaktiver Gruppen a) und b) bis z) auf, so ist es bevorzugt, dass die reaktiven Gruppen a) zu b) bis z) beim Aufbau chemischer Verbindungen durch Ausbildung neuer C-O und / oder C-N und / oder C-S Bindungen in einem Verhältnis von 10:1 bis 1:10, oder bevorzugt in einem Bereich von 5:1 bis 1:5, oder bevorzugt in einem Bereich von 3:1 bis 1:3 innerhalb eines Polymermoleküls des ersten oder des weiteren pulverförmigen Materials vorliegen. Bevorzugt weisen die mindestens eine reaktive Gruppe a) zu der mindestens einen reaktive Gruppe b) bis z) innerhalb eines Polymermoleküls des ersten oder des weiteren pulverförmigen Materials einen Abstand von mindestens 8 Kohlenstoffatomen, oder bevorzugt von mindestens 10 Kohlenstoffatomen, oder bevorzugt von mindestens 20 Kohlenstoffatomen, oder bevorzugt in einem Bereich von 10 bis 200 Kohlenstoffatomen, oder bevorzugt von 15 bis 150 Kohlenstoffatomen, oder bevorzugt von 20 bis 100 Kohlenstoffatomen auf.

In einer weiteren bevorzugten Ausgestaltung des Verfahrens beinhaltet mindestens eines der pulverförmigen Materialien, ausgewählt aus der Gruppe bestehend aus dem ersten pulverförmigen Material und dem mindestens einen weiteren pulverförmigen Material, mindestens eine erste Verbindung oder eine weitere Verbindung, die eine molekulare Masse in einem Bereich von 100 bis 200000 g/mol auf. Bevorzugt beinhaltet das erste und gegebenenfalls das mindestens eine weitere pulverförmige Material ein Polymer mit einer molekularen Masse in einem Bereich von 200 bis 80000 g/mol, oder bevorzugt in einem Bereich von 500 bis 60 000 g/mol, oder bevorzugt in einem Bereich von 1000 bis 50 000 g/mol.

Das pulverförmige Material, insbesondere das erste und/oder das weitere pulverförmige Material, beinhalten das Polymer in einem Bereich von 10 bis 99,9 Gew.-%, oder bevorzugt in einem Bereich von 20 bis 99,5 Gew.-%, oder bevorzugt in einem Bereich von 30 bis 99,3 Gew.-%, oder bevorzugt in einem Bereich von 40 bis 99,1 Gew.-%, oder bevorzugt in einem Bereich von 50 bis 99 Gew.-%, bezogen auf das Gesamtgewicht des pulverförmigen Materials. Das pulverförmige Material weist bevorzugt weitere Materialien auf. Bevorzugt weist das pulverförmige Material ein weiteres Material auf ausgewählt aus der Gruppe bestehend aus Katalysatoren, (IR-)Strahlung absorbierenden Stoffen, Antiblockmitteln, Inhibitoren, Pigmenten, Farbstoffen, Flammschutzmitteln, Stabilisatoren gegen Alterungs- und Witterungseinflüsse, gegen Hydrolyse, Licht, Hitze und Verfärbung, Weichmachern, Gleit- und Entformungsmitteln, fungistatisch und bakteriostatisch wirkende Substanzen, Verstärkungsmitteln sowie anorganischen und/oder organischen Füllstoffe und deren Mischungen oder einer Kombination aus mindestens zwei davon.

Bevorzugt wird durch das Behandeln in Schritt ii. bzw. ggf. in Schritt iv. eine stoffschlüssige Verbindung zwischen den Pulverkörnern bzw. Pulverpartikeln des behandelten Teils des ersten oder des weiteren pulverförmigen Materials erreicht. Bevorzugt findet durch das Behandeln des mindestens einen Teils des pulverförmigen Materials in Schritt ii. und ggf. in Schritt iv. eine chemische Reaktion zwischen mindestens einem Teil der reaktiven Gruppen statt ausgewählt aus der Gruppe bestehend aus a) und a), oder a) und b) oder b) und b), wobei b) eine Vielzahl verschiedener reaktive Gruppen darstellen kann, statt. Bevorzugt handelt es sich bei der chemischen Reaktion um die Bildung einer kovalenten Bindung zwischen zwei bevorzugt unterschiedlichen Atomen. Bevorzugt sind die bevorzugt unterschiedlichen Atome ausgewählt aus der Gruppe bestehend aus Kohlenstoff (C), Sauerstoff (0), Stickstoff (N), Phosphor (P), Schwefel, (S), Silizium (Si), Chlor (Cl), Fluor (F), Iod (I) oder einer Kombination aus mindestens zwei hiervon.

In einer bevorzugten Ausgestaltung des Verfahrens ist mindestens eine der reaktiven Gruppen b), bevorzugt b) bis z), ausgewählt aus der Gruppe bestehend aus einer Hydroxylgruppe, einer Aminogruppe, einer Thiolgruppe, einer Epoxidgruppe, einer Anhydridgruppe, einer Urethangruppe, einer Harnstoffgruppe, einer Carboxygruppe, einer Carboxylatgruppe, einer Isocyanatgruppe, einer Estergruppe, einer Carbodiimidgruppe, einer Amidgruppe, einer Carbonsäuregruppe einer Aldehydgruppe, einer Triazingruppe, einer Uretdiongruppe, einer zyklischen Estergruppe, einer zyklischen Urethangruppe, einer zyklischen Lactam Gruppe, einer zyklischen Carbonatgruppe, einer Thiuramgruppe, oder einer Kombination aus mindestens zwei hiervon. Auch hier kann b) für eine Vielzahl unterschiedlicher reaktiver Gruppen b) bis z) stehen und symbolisiert jede weitere reaktive Gruppe, die sich von der ersten reaktiven Gruppe a) oder einer anderen weiteren reaktiven Gruppe b) unterscheidet. Bevorzugt weist das erste pulverförmige Material oder das wenigstens eine weitere pulverförmige Material mindestens zwei unterschiedliche reaktive Gruppen a) oder b) auf. Bevorzugt weist das erste pulverförmige Material unterschiedlich viele reaktive Gruppen a) oder b) auf als das mindestens eine weitere pulverförmige Material. Bevorzugt weist das erste pulverförmige Material mindestens 10 %, oder bevorzugt mindestens 20 %, oder bevorzugt mindestens 30 %, oder bevorzugt mindestens 50 % an reaktiven Gruppen a) oder b) auf, die sich von den reaktiven Gruppen a) oder b) des mindestens einen weiteren pulverförmigen Materials unterscheiden. Bevorzugt werden die reaktiven Gruppen a) und/oder b) so ausgewählt, dass jeweils eine reaktive Gruppe a) mit einer reaktive Gruppe b) in dem Schritt ii. potenziell miteinander reagieren kann.

In einer bevorzugten Ausgestaltung des Verfahrens beinhaltet das pulverförmige Material mindestens eine erste Verbindung, die mindestens die erste reaktive Gruppe a) beinhaltet und mindestens eine weitere Verbindung, die mindestens die weitere reaktive Gruppe b) beinhaltet. Die erste Verbindung kann ein Monomer oder ein Polymer sein.

Die erste Verbindung weist bevorzugt mindestens drei reaktive Gruppen auf, wobei mehr als 50 % der reaktiven Gruppen eine reaktive Gruppe a) ist und weniger als 50 % der reaktiven Gruppen eine reaktive Gruppe b) ist, wobei sich die reaktiven Gruppen a) und b) chemisch voneinander unterscheiden.

Die weitere Verbindung kann ein Monomer oder ein Polymer sein. Die erste Verbindung weist bevorzugt mindestens drei reaktive Gruppen auf, wobei mehr als 50 % der reaktiven Gruppen eine reaktive Gruppe b) ist und weniger als 50 % der reaktiven Gruppen eine reaktive Gruppe a) ist, wobei sich die reaktiven Gruppen a) und b) chemisch voneinander unterscheiden.

In einer bevorzugten Ausgestaltung des Verfahrens ist die mindestens eine erste reaktive Gruppe a) eine Isocyanat-Gruppe oder ein Produkt aus einer Umsetzung einer Isocyanatgruppe mit sich selbst oder mit einer anderen der reaktiven Gruppen der Verbindung (Derivat). Bevorzugt ist die Isocyanat-Gruppe oder deren Derivat ausgewählt aus der Gruppe bestehend aus einer geblockten Isocyanat-Gruppe, einer ungeblockten Isocyanat-Gruppe, einer Urethangruppe, einer Uretdiongruppe, einer Harnstoffgruppe, einer Biuretgruppe, einer Isocyanuratgruppe, einer Carbodiimidgruppe, einer Allophanatgruppe, einer Iminooxadiazindiongruppe und einer Oxadiazintriongruppe oder einer Kombination aus mindestens zwei hiervon.

In einer bevorzugten Ausgestaltung des Verfahrens ist die mindestens eine weitere reaktive Gruppe b) eine isocyanat-reaktive Gruppe. Bevorzugt ist die isocyanat-reaktive Gruppe ausgewählt aus der Gruppe bestehend aus einer Hydroxylgruppe, einer Aminogruppe, einer Thiolgruppe, einer Epoxygruppe, einer Anhydridgruppe, einer Urethangruppe, einer Harnstoffgruppe, einer Carboxylgruppe, einer Carboxylatgruppe oder einer Kombination aus mindestens zwei hiervon.

In einer bevorzugten Ausgestaltung des Verfahrens weist das erste pulverförmige Material die erste Verbindung in einem Verhältnis zu der mindestens einen weiteren Verbindung in einem Bereich von 1:200 bis 200:1, oder bevorzugt in einem Bereich von 1:100 bis 100:1, oder bevorzugt in einem Bereich von 1:50 bis 50:1, oder bevorzugt in einem Bereich von 1:10 bis 10:1, oder bevorzugt in einem Bereich von 1:5 bis 5:1, oder bevorzugt in einem Bereich von 1:2 bis 2:1 bezogen auf deren Gesamtmasse auf.

In einer bevorzugten Ausgestaltung des Verfahrens ist der Teil des pulverförmigen Materials, der in Schritt ii. nicht behandelt wird, nach Schritt ii. weiterhin pulverförmig. Bevorzugt ist der nach Behandlung in Schritt ii. weiterhin pulverförmige Teil wiederverwertbar.

In einer bevorzugten Ausgestaltung des Verfahrens liegt der Anteil des in Schritt ii. behandelten pulverförmigen Materials in einem Bereich von 0,1 bis 95 Gew.-%, oder bevorzugt in einem Bereich von 0,5 bis 90 Gew.-%, oder bevorzugt in einem Bereich von 1 bis 80 Gew.-%, oder bevorzugt in einem Bereich von 5 bis 75 Gew.-%, oder bevorzugt in einem Bereich von 10 bis 70 Gew.-%, bezogen auf die Gesamtmenge des in Schritt i. aufgebrachten pulverförmigen Materials.

In einer bevorzugten Ausgestaltung des Verfahrens erfolgt das Behandeln des pulverförmigen Materials in Schritt ii. mit Hilfe einer Lichtquelle, ausgewählt aus der Gruppe bestehend aus einem Infrarotlaser, einer Infrarot-Laserdiode, einem im sichtbaren Bereich emittierenden Laser, einem Strahler, der im IR, sichtbaren oder ultravioletten Bereich des elektromagnetischen Spektrums emittiert, einer Elektronenstrahlquelle, einem UV-Laser, einer UV-Laserdiode oder einer Kombination aus mindestens zwei hiervon. Bevorzugt ist das Licht der Lichtquelle fokussierbar. Bevorzugt wird während des Schritts ii. und ggf. in Schritt iv. zu einem bestimmten Zeitpunkt eine Fläche in einem Bereich von 1 $\mu$m$^2$ bis 10 mm$^2$, oder bevorzugt in einem Bereich von 0,01 bis 5 mm$^2$, oder bevorzugt in einem Bereich von 0,05 bis 1 mm$^2$ bestrahlt.

In einer bevorzugten Ausgestaltung des Verfahrens beinhaltet das Verfahren weiterhin mindestens einen der folgenden Schritte:

vii. Aufbringen eines zusätzlichen pulverförmigen Materials auf mindestens einen Teil des in Schritt ii. oder iv. behandelten Materials und wiederholen des Schrittes ii.; dabei kann das zusätzliche Material entweder keine reaktiven Gruppen aufweisen oder aber reaktive Gruppen aufweisen, ausgewählt aus der Gruppe bestehend aus a), b) bis z) oder einer Kombination aus mindestens zwei hiervon;

viii. 1 bis 10000-faches, oder bevorzugt 2 bis 9000-faches, oder bevorzugt 5 bis 8000-faches, oder bevorzugt 10 bis 5000-faches Wiederholen der Schritte i. oder iii. in beliebiger Reihenfolge, jeweils in Kombination mit Schritt ii. bzw. iv.;

ix. Lösen des dreidimensionalen Objekts von der Oberfläche des Substrats;

x. Entfernen und gegebenenfalls rezyklieren des in Schritt ii. oder in Schritt iv. nicht behandelten pulverförmigen Materials von dem dreidimensionalen Objekt;

xi. Tempern des dreidimensionalen Objektes bei einer Temperatur in einem Bereich von 100 bis 350 °C, oder bevorzugt in einem Bereich von 120 bis 300 °C, oder bevorzugt in einem Bereich von 130 bis 250 °C bevorzugt für einen Zeitraum in einem Bereich von 1 bis 600 Minuten, oder bevorzugt in einem Bereich von 5 bis 500 Minuten, oder bevorzugt in einem Bereich von 10 bis 400 Minuten;

xii. Das Entfernen des nicht in Schritt ii. bzw. ggf. in Schritt iv. behandelten pulverförmigen Materials.

Ein weiterer Gegenstand der Erfindung betrifft ein Bauteil, erhältlich nach einem Verfahren wie zuvor beschrieben. Das Bauteil beziehungsweise die Bestandteile des Bauteils weisen die Eigenschaften, Materialien, Dimensionen und Formen wie zuvor für das Verfahren beschrieben auf.

Ein weiterer Gegenstand der Erfindung betrifft ein pulverförmiges Material, beinhaltend mindestens eine erste Verbindung beinhaltend eine erste reaktive Gruppe a) und mindestens eine weitere Verbindung, beinhaltend eine weitere reaktive Gruppe b), wobei das pulverförmige Material geeignet ist zur Verwendung in dem zuvor beschriebenen erfindungsgemäßen Verfahren. Die Eigenschaften, Mengen, Zusammensetzungen und Funktionalitäten der ersten Verbindung und der mindestens einen weiteren Verbindung sind bevorzugt die gleichen wie für das die jeweiligen Verbindungen im Zusammenhang mit den unterschiedlichen pulverförmigen Materialien für das erfindungsgemäße Verfahren beschrieben wurden. Bevorzugt weisen die Partikel des ersten sowie bevorzugt aller weiterer pulverförmigen Materialien mindestens folgende Eigenschaften auf:

- Mindestens 10 Gew.% der Partikel sowohl an der ersten Verbindung als auch an einer der mindestens einen weiteren Verbindung beinhalten;
- Jeder Partikel mindestens 10 Gew.-%, bevorzugt mindestens 30 Gew.-%, oder bevorzugt wenigstens 50 Gew.-% an der ersten Verbindung beinhaltet;
- Jeder Partikel mindestens 10 Gew.-%, bevorzugt mindestens 30 Gew.-%, oder bevorzugt mindestens 50 Gew.-% an eine der mindestens einen weiteren Verbindung beinhaltet;

Die mittlere Partikelgröße des Pulver in einem Bereich von 1 bis 1000 $\mu$m, bevorzugt 2 bis 500 $\mu$m und besonders bevorzugt 5 bis 200 $\mu$m liegt, bestimmt durch z.B. dynamischer Lichtstreuung oder Auszählung der Partikelgrößen unter einem Lichtmikroskop

In einer bevorzugten Ausgestaltung des pulverförmigen Materials weist die erste Verbindung eine Schmelztemperatur auf, die nicht mehr als 50 °C, bevorzugt nicht mehr als 40 °C, oder bevorzugt nicht mehr als 30 °C von der Schmelztemperatur der mindestens einen weiteren Verbindung abweicht. Bevorzugt sind die unterschiedlichen Verbindungen in den Pulverkörnern des jeweiligen pulverförmigen Materials, beispielsweise des ersten pulverförmigen Materials gemischt.

In einer bevorzugten Ausgestaltung des pulverförmigen Materials, ist mindestens eine der Verbindungen ausgewählt aus der ersten oder einer der weiteren Verbindungen oder mehr als einer der weiteren Verbindungen in der Schmelze mindestens einer der anderen Verbindungen lösbar. Bevorzugt liegt die erste Verbindung auf der Oberfläche des Pulverkorns von der mindestens einen weiteren Verbindung als separates Pulver vor.

In einer bevorzugten Ausgestaltung des pulverförmigen Materials weist die erste Verbindung und die mindestens eine weitere Verbindung eine anteilige Mischungsschmelztemperatur auf, die von der Schmelztemperatur der ersten Verbindung und der Schmelztemperatur der jeweiligen weiteren Verbindung jeweils um mindestens 2°C, bevorzugt um mindestens 3°C, oder bevorzugt um mindestens 5°C, oder bevorzugt um mindestens 10 °C, oder bevorzugt in einem Bereich von 1 bis 150 °C, oder bevorzugt in einem Bereich von 2 bis 100 °C, oder bevorzugt in einem Bereich von 3 bis 70 °C, oder bevorzugt in einem Bereich von 4 bis 50 °C von der Schmelztemperatur abweicht.

Experimenteller Teil

Vergleichsbeispiel 1: Lasersintern von reinem TPU-Pulver (Luvosint X92A-1)

Das kommerziell erhältliches Lasersinterpulver Luvosint® X92A-1 (von Lehmann&Voss&Co) auf Basis von Thermoplastischem Polyurethan mit einer Shore Härte von A92 wurde in einer Sharebot SnowWhite Lasersinteranlage verarbeitet. Hierfür wurde das Pulver gleichmäßig in die Pulverauftragsbehälter gefüllt und ein Pulverbett erstellt. Der Bauraum wurde nicht aufgeheizt, sondern die erforderliche Energie rein über den Laser eingebracht. Die Laserleistung betrug 40 %, dies entspricht 5W. Der Strahl wurde kreuzförmig (Doppelbelichtung) mit einer Scangeschwindigkeit von 1600 mm/s und einem Hatch-Abstand von 0,1 mm über das Pulverbett geführt.

Beispiel 1: Lasersintern von TPU-Pulver in Kombination mit mikronisiertem IPDI-Trimer

Das kommerziell erhältliches Lasersinterpulver Luvosint® X92A-1 (von Lehmann&Voss&Co) auf Basis von Thermoplastischem Polyurethan mit einer Shore Härte von A92 wurde mit mikronisiertem IPDI-Trimer (Desmodur® Z, Covestro, vgl. auch EP2159238A1) im Verhältnis 90:10 Gewichtsprozent bei Raumtemperatur (also ohne die Materialien aufzuschmelzen) gemischt. Dazu wurde ein entsprechendes Gewichtsverhältnis der Stoffe eingewogen und innig in einem zu 30% gefüllten Taumelmischer bei 30 U/min und für 60 min miteinander vermischt. Dieses wurde mit den gleichen Prozessparametern wie das reine TPU-Pulver im Vergleichsbeispiel 1 in der Sharebot SnowWhite gesintert. Im Vergleich zum reinen TPU-Pulver tritt eine etwas größere Schwindung beim Lasersintern auf.

Es wurden kleine Plättchen von 20 mm Durchmesser und einer Pulverlage (ca. 0,2 mm) Dicke mit den oben genannten Parametern gesintert, zum einen aus reinem TPU gemäß Vergleichsbeispiel 1 und aus einer Mischung von 90 Gewichts-% TPU und 10 Gewichts-% mikronisiertem IPDI gemäß Beispiel 1. Die gesinterten Plättchen wurden dann in einem Rheometer (*TA Instruments ARES*) in Oszillation auf ihre Schmelzviskosität und ihren Speichermodul hin untersucht. Die Messfrequenz betrug 1 Hz, die Messtemperatur 170 °C und die Scherrate 1/s. In nachfolgender Tabelle sind die Werte nach einer Messzeit von 2 Minuten aufgeführt.

| Beispiel | Gewichts-% TPU | Gewichts-% IPDI | Viskosität | Speichermodul G' |
|---|---|---|---|---|
| Vergleichsbeispiel 1 | 100 | 0 | 1200 Pa·s | 1000 Pa |
| Beispiel 1 | 90 | 10 | 3000 Pa·s | 7600 Pa |

Man erkennt einen deutlichen Unterschied sowohl in der Viskosität als auch im Speichermodul G' zwischen der reinen TPU-Probe und der Mischung mit 10 Gewichts-% IPDI-Pulver: Die Viskosität steigt mit IPDI um den Faktor 2,5 und G' etwa um den Faktor 7,5 gegenüber der reinen TPU-Probe. Beide Wertepaare lassen auf eine Vernetzung des TPU durch das hinzugefügte IPDI schließen.

Des Weiteren wurde eine Dynamisch-Mechanische-Analyse in Scherung gemäß DIN EN ISO 6721-1 an gesinterten Probekörpern durchgeführt. Die Glasübergangstemperatur, ermittelt aus dem Maximum der Verlustmodul-Kurve, beträgt für die reine TPU-Probe -17 °C. Bei der Mischung aus 90 Gew.-% TPU und 10 Gew.-% IPDI-Trimer ermittelt man eine Glasübergangstemperatur von -6 °C. Die Verschiebung der Glasübergangstemperatur zu höheren Werten als auch der Anstieg des Modul G' sind Zeichen für einen Molekulargewichtsaufbau und /oder eine Vernetzung des Materials während des Sinterprozesses.

**Patentansprüche**

1. Ein Verfahren zur Herstellung eines dreidimensionalen Objektes mittels eines pulverbasierten additiven Herstellungsverfahrens aus mindestens einem ersten pulverförmigen Material, wobei das mindestens eine erste pulverförmige Material mindestens eine erste Verbindung beinhaltet, die eine erste reaktive Gruppe a) aufweist, wobei die erste reaktive Gruppe a) ausgewählt ist aus der Gruppe bestehend aus einer Isocyanatgruppe, einer blockierten Isocyanatgruppe oder einer Mischung hieraus.

2. Das Verfahren nach Anspruch 1, wobei das Verfahren mindestens die folgenden Schritte beinhaltet:

   i. Bereitstellen wenigstens des ersten pulverförmigen Materials auf wenigstens einem Teil einer Oberfläche, wobei mindestens das erste pulverförmige Material mindestens eine erste Verbindung beinhaltet, die mindestens eine erste reaktive Gruppe a) und gegebenenfalls mindestens eine weitere reaktive Gruppe b) beinhaltet;
   ii. gegebenenfalls Behandeln mindestens eines Teils des ersten pulverförmigen Materials;
   iii. gegebenenfalls Aufbringen eines weiteren pulverförmigen Materials, wobei das weitere pulverförmige Material eine weitere Verbindung beinhaltet, wobei die weitere Verbindung gegebenenfalls eine reaktive Gruppe a) und/oder gegebenenfalls mindestens eine weitere reaktive Gruppe b) beinhaltet;
   iv. Behandeln mindestens eines Teils des in Schritt i. und/oder in Schritt iii. aufgebrachten pulverförmigen Materials;
   v. mindestens dreimaliges Wiederholen der Schritte i. bis iv. mit dem ersten pulverförmigen Material und/oder dem weiteren pulverförmigen Material, unter Erhalt des dreidimensionalen Objektes;
   vi. gegebenenfalls thermisches oder chemisches Nachbehandeln des erhaltenen Objektes;

   wobei beim Behandeln in Schritt ii. und gegebenenfalls in Schritt iv. in dem behandelten Teil des ersten und gegebenenfalls des weiteren pulverförmigen Materials mindestens ein Teil der reaktiven Gruppen a) und gegebenenfalls b) untereinander und/oder miteinander unter Erhalt eines Endmaterials reagieren.

3. Das Verfahren nach einem der vorhergehenden Ansprüche, wobei sich beim Behandeln in den Schritten ii. und/oder iv. der G'-Modul mindestens eines der behandelten pulverförmigen Materialien im Vergleich zu dem G'-Modul des jeweils unbehandelten pulverförmigen Materials in der Schmelze um mindestens 100 % vergrößert.

4. Das Verfahren nach einem der vorhergehenden Ansprüche, wobei das erste pulverförmige Material eine Menge an reaktiven Gruppen in einem Bereich von 0,1 bis 25 Gew.-%, bezogen auf das Gesamtgewicht des jeweiligen Moleküls aufweist, das die reaktiven Gruppen enthält.

5. Das Verfahren nach einem der vorhergehenden Ansprüche, wobei mindestens eines der pulverförmigen Materialien mindestens eine erste Verbindung oder eine weitere Verbindung beinhaltet, die eine molekulare Masse in einem Bereich von 100 bis 200 000 g/mol aufweist.

6. Das Verfahren nach einem der vorhergehenden Ansprüche, wobei mindestens eine der mindestens einen reaktiven Gruppen b) ausgewählt ist aus der Gruppe bestehend aus einer Hydroxylgruppe, einer Aminogruppe, einer Thiolgruppe, einer Epoxidgruppe, einer Anhydridgruppe, einer Urethangruppe, einer Harnstoffgruppe, einer Carboxygruppe, einer Carboxylatgruppe, einer Carboxylsäuregruppe, einer Isocyanatgruppe, einer Estergruppe, einer Carbodiimidgruppe, einer Amidgruppe, einer Aldehydgruppe, einer Triazingruppe, einer Uretdiongruppe, einer zyklischen Urethangruppe, einer zyklischen Lactam Gruppe, einer zyklischen Carbonatgruppe, einer Thiuramgruppe, oder einer Kombination aus mindestens zwei hiervon.

7. Das Verfahren nach einem der vorhergehenden Ansprüche, wobei das erste pulverförmige Material und gegebenenfalls das weitere pulverförmige Material mindestens eine erste Verbindung beinhaltet, die mindestens die erste reaktive Gruppe a) beinhaltet und gegebenenfalls mindestens eine weitere Verbindung beinhaltet, die mindestens eine weitere reaktive Gruppe b) beinhaltet.

8. Das Verfahren nach einem der vorhergehenden Ansprüche, wobei mindestens die mindestens eine erste reaktive Gruppe a) eine Isocyanat-Gruppe oder ein Derivat davon ist, ausgewählt aus der Gruppe bestehend aus einer geblockten Isocyanat-Gruppe, einer ungeblockten Isocyanat-Gruppe, einer Urethangruppe, einer Uretdiongruppe, einer Harnstoffgruppe, einer Biuretgruppe, einer Isocyanuratgruppe, einer Carbodiimidgruppe, einer Allophanatgruppe, einer Iminooxadiazindiongruppe und einer Oxadiazintriongruppe oder einer Kombination aus mindestens zwei hiervon.

9. Das Verfahren nach einem der vorhergehenden Ansprüche, wobei die mindestens eine weitere reaktive Gruppe ausgewählt aus der Gruppe bestehend aus b) bis z) eine isocyanat-reaktive Gruppe ist, ausgewählt aus der Gruppe bestehend aus einer Hydroxylgruppe, einer Aminogruppe, einer Thiolgruppe, einer Epoxygruppe, einer Anhydridgruppe, einer Urethangruppe, einer Harnstoffgruppe, einer Carboxylsäuregruppe, einer Carboxylatgruppe oder einer Kombination aus mindestens zwei hiervon.

10. Das Verfahren nach einem der vorherigen Ansprüche, wobei das erste pulverförmige Material die erste Verbindung in einem Verhältnis zu der mindestens einen weiteren Verbindung in einem Bereich von 1:200 bis 200:1 bezogen auf deren Gesamtmasse aufweist.

11. Das Verfahren nach einem der vorhergehenden Ansprüche, wobei das Verfahren weiterhin mindestens einen der folgenden Schritte beinhaltet:

   vii. Aufbringen eines zusätzlichen pulverförmigen Materials auf mindestens einen Teil des in Schritt ii. oder iv. behandelten Materials und wiederholen des Schrittes ii.;
   viii. 1 bis 10000-faches Wiederholen der Schritte i. oder iii. in beliebiger Reihenfolge, jeweils in Kombination mit Schritt ii. bzw. iv.;
   ix. Lösen des dreidimensionalen Objekts von der Oberfläche des Substrats;
   x. Entfernen und gegebenenfalls rezyklieren des in Schritt ii. oder in Schritt iv. nicht behandelten pulverförmigen Materials von dem dreidimensionalen Objekt;
   xi. Tempern des dreidimensionalen Objektes bei einer Temperatur in einem Bereich von 100 bis 350 °C.

12. Ein Bauteil, erhältlich nach einem Verfahren gemäß einem der Ansprüche 1 bis 11.

13. Ein pulverförmiges Material, beinhaltend mindestens eine erste Verbindung, beinhaltend eine erste reaktive Gruppe a) und mindestens eine weitere Verbindung, beinhaltend eine weitere reaktive Gruppe b), wobei das pulverförmige Material geeignet ist zur Verwendung in einem Verfahren nach einem der Ansprüche 1 bis 14.

14. Das pulverförmige Material nach Anspruch 13, wobei die erste Verbindung eine Schmelztemperatur aufweist, die nicht mehr als 50 °C von der Schmelztemperatur der mindestens einen weiteren Verbindung abweicht.

15. Das pulverförmige Material nach einem der Ansprüche 13 oder 14, wobei mindestens eine der Verbindungen ausgewählt aus der ersten oder einer der weiteren Verbindungen in der Schmelze mindestens einer der anderen Verbindungen lösbar ist.

16. Das pulverförmige Material nach einem der Ansprüche 13 bis 15, wobei mindestens eine der mindestens zwei Verbindungen auf der Oberfläche des Pulverkorns eines der jeweils anderen Verbindungen als separates Pulver liegt.

17. Das pulverförmige Material nach einem der Ansprüche 13 bis 16, wobei das pulverförmige Material eine Mischungsschmelztemperatur aufweist, die von der Schmelztemperatur der ersten Verbindung und der Schmelztemperatur der jeweiligen weiteren Verbindung jeweils um mindestens 2°C abweicht.

Europäisches
Patentamt

European
Patent Office

Office européen
des brevets

**EUROPÄISCHER RECHERCHENBERICHT**

Nummer der Anmeldung

EP 17 17 0254

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2016/085914 A1 (PPG IND OHIO INC [US]) 2. Juni 2016 (2016-06-02) * Absatz [0002] * * Absätze [0006], [0048] * * Anspruch 22 * ----- | 1-17 | INV. B33Y70/00 B29C64/153 B33Y10/00 |
| A | US 2016/067917 A1 (HIRATA KOKI [JP] ET AL) 10. März 2016 (2016-03-10) * Absatz [0004] * * Absatz [0043] * * Absätze [0048] - [0049] * * Absätze [0066] - [0067] * * Anspruch 1 * ----- | 1-17 | |
| X | EP 0 669 351 A1 (BAYER AG [DE]) 30. August 1995 (1995-08-30) * Anspruch 1 * ----- | 13,16 | |
| A | EP 3 028 842 A1 (ROWAK AG [CH]) 8. Juni 2016 (2016-06-08) * Anspruch 1 * * Absatz [0019] * ----- | 1-17 | RECHERCHIERTE SACHGEBIETE (IPC) B33Y B29C C08G |

Der vorliegende Recherchenbericht wurde für alle Patentansprüche erstellt

| Recherchenort | Abschlußdatum der Recherche | Prüfer |
|---|---|---|
| Den Haag | 14. November 2017 | Martins Lopes, Luis |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 & : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 17 17 0254

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-11-2017

| Im Recherchenbericht angeführtes Patentdokument | Datum der Veröffentlichung | Mitglied(er) der Patentfamilie | Datum der Veröffentlichung |
|---|---|---|---|
| WO 2016085914 A1 | 02-06-2016 | AU 2015353618 A1 | 15-06-2017 |
| | | AU 2015353634 A1 | 15-06-2017 |
| | | AU 2015353730 A1 | 15-06-2017 |
| | | CA 2968538 A1 | 02-06-2016 |
| | | CA 2968549 A1 | 02-06-2016 |
| | | CA 2968670 A1 | 02-06-2016 |
| | | CN 107107480 A | 29-08-2017 |
| | | CN 107108833 A | 29-08-2017 |
| | | CN 107108849 A | 29-08-2017 |
| | | EP 3224023 A1 | 04-10-2017 |
| | | EP 3224024 A1 | 04-10-2017 |
| | | EP 3224292 A1 | 04-10-2017 |
| | | KR 20170091121 A | 08-08-2017 |
| | | KR 20170093861 A | 16-08-2017 |
| | | KR 20170113538 A | 12-10-2017 |
| | | US 2017321083 A1 | 09-11-2017 |
| | | WO 2016085914 A1 | 02-06-2016 |
| | | WO 2016085976 A1 | 02-06-2016 |
| | | WO 2016085992 A1 | 02-06-2016 |
| US 2016067917 A1 | 10-03-2016 | JP 2016055531 A | 21-04-2016 |
| | | US 2016067917 A1 | 10-03-2016 |
| EP 0669351 A1 | 30-08-1995 | AT 175691 T | 15-01-1999 |
| | | CA 2143025 A1 | 26-08-1995 |
| | | DE 4406157 A1 | 31-08-1995 |
| | | EP 0669351 A1 | 30-08-1995 |
| | | ES 2127953 T3 | 01-05-1999 |
| | | JP 3547831 B2 | 28-07-2004 |
| | | JP H07247448 A | 26-09-1995 |
| | | KR 100341257 B1 | 31-01-2005 |
| | | NO 950720 A | 28-08-1995 |
| | | US 5510444 A | 23-04-1996 |
| EP 3028842 A1 | 08-06-2016 | CH 710441 A2 | 15-06-2016 |
| | | EP 3028842 A1 | 08-06-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1648686 A
- EP 16199955 A
- GB 2221465 A
- GB 2222161 A
- DE 3240613 A
- DE 3219608 A
- EP 0100129 A
- GB PS1391066 A
- GB PS1386399 A
- GB 809809 A
- EP 0056158 A
- EP 0056159 A
- EP 0033581 A
- EP 13196508 A
- EP 15164520 A
- EP 2159238 A1

**In der Beschreibung aufgeführte Nicht-Patentliteratur**

- **VON E. DELEBECQ ; J. P. PASCAULT ; B. BOUTEVIN ; F. GANACHAUD.** On the versatility of urethane/urea bonds: reversibility, blocked isocyanate, and non-isocyanate polyurethane. *Chemical Reviews,* Januar 2013, vol. 113 (1), 80-118
- *Zinnverbindungen der in European Polymer Journal,* 1979, vol. 16, 147-148